(19) Europäisches Patentamt
European Patent Office
Office européen des brevets

(11) EP 4 255 959 B1

(12) EUROPEAN PATENT SPECIFICATION

(45) Date of publication and mention of the grant of the patent:
**03.07.2024 Bulletin 2024/27**

(21) Application number: **21834883.7**

(22) Date of filing: **29.11.2021**

(51) International Patent Classification (IPC):
***C08G 64/02*** *(2006.01)* ***C08G 64/34*** *(2006.01)*

(52) Cooperative Patent Classification (CPC):
**C08G 64/0208; C08G 64/34; C08G 65/2603**

(86) International application number:
**PCT/IB2021/061066**

(87) International publication number:
**WO 2022/118171 (09.06.2022 Gazette 2022/23)**

(54) **POLYALKYLENE CARBONATE OBTAINED FROM BIODEGRADABLE CO2 AND WITH SELF-HEALING PROPERTIES**

POLYALKYLENCARBONAT AUS BIOLOGISCH ABBAUBAREM CO2 UND MIT SELBSTHEILENDEN EIGENSCHAFTEN

CARBONATE DE POLYALKYLÈNE OBTENU À PARTIR DE CO2 BIODÉGRADABLE ET PRÉSENTANT DES PROPRIÉTÉS D'AUTO-CICATRISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2020 IT 202000029246**

(43) Date of publication of application:
**11.10.2023 Bulletin 2023/41**

(73) Proprietors:
- **EPOX-CO2 S.R.L.**
  **25065 Lumezzane (BS) (IT)**
- **RIJKSUNIVERSITEIT GRONINGEN**
  **9712 CP Groningen (NL)**
- **Università degli Studi di Brescia**
  **25121 Brescia (IT)**

(72) Inventors:
- **SARTORE, Luciana**
  **25121 Brescia (IT)**
- **PANDINI, Stefano**
  **25121 Brescia (IT)**
- **PESCARMONA, Paolo P.**
  **9712 CP Groningen (NL)**
- **TANG, Zhenchen**
  **9712 CP Groningen (NL)**
- **GNALI, Luca**
  **25065 Lumezzane (Brescia) (IT)**
- **SALA, Giovanni**
  **25065 Lumezzane (Brescia) (IT)**

(74) Representative: **Finetti, Claudia**
**Bugnion S.p.A.**
**Viale Lancetti, 17**
**20158 Milano (IT)**

(56) References cited:
**CN-A- 101 468 320**
**KR-A- 20180 075 312**
**US-A1- 2019 010 277**
**US-B2- 9 062 155**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 255 959 B1

## Description

## FIELD OF THE INVENTION

**[0001]** The present invention relates to a polyalkylene carbonate, preferably a polypropylene carbonate (PPC), and the use thereof in the sector of packaging, surface coating, in cosmetics, in the biomedical or textile sectors or to produce composite materials or moisture absorption devices, said polyalkylene carbonate being obtained by a heterogeneous catalytic copolymerization reaction from $CO_2$ and an alkyl epoxide preferably containing at least 3 atoms of carbon.

## PRIOR ART

**[0002]** In the field of materials science, one of the most felt technological needs in the current state of the art is to try to replace the plastic materials obtained from oil with plastic materials (preferably biodegradable) produced from renewable raw materials, while maintaining the existing industrial production chains and the physical-mechanical properties of the final products as much as possible. In fact, the production of plastic is continuously growing and does not show signs of decreasing: from 15 million tons in 1964 to about 400 million in 2016. Today plastic is the third material produced by mankind, with the greatest spread on Earth after steel and cement. The possibility of producing plastics with a minor use of (or ideally without) oil derivatives is therefore a particularly topical area of research and represents, at the same time, a global environmental requirement which cannot be ignored. However, the possibility of reducing dependence on oil resources is still subject to the availability of effective and efficient technologies which should allow a rapid and cost-effective transition towards renewable raw materials, ideally also leading to even more efficient products. The greatest technological frontier to be addressed is not only the replacement of monomers/polymers obtained from oil with monomers/polymers obtained from renewable sources, but also and above all the possibility of finding production processes which allow the performance of the finished products to be maintained (or improved) in terms of mechanical features, economic efficiency and mass production capacity. Every year, the world produces more than 10 billion tons of carbon dioxide due to the combustion of fossil compounds, the refining of oil, fermentation and other production processes. The impact of carbon dioxide emissions is further increased by deforestation and/or fires affecting large portions of forests. This has caused the increase in the concentration of carbon dioxide in the atmosphere, causing an increasingly more serious greenhouse effect. In fact, carbon dioxide ($CO_2$) is one of the so-called greenhouse-effect gases and the scientific community now commonly accepts the role which the increase of greenhouse gases has in the climate and environmental changes underway. At the same time, carbon dioxide is an important source of carbon in nature, together with the reserves found in the deep ocean, marine sediments, the terrestrial biosphere and the surface oceans. With the increase in the amount of $CO_2$ due to human activities, the exploration of new technologies which can use carbon dioxide, currently considered a waste product harmful to the environment, instead as a new resource for new uses, has attracted more and more interest in the scientific community. Among these, the use of carbon dioxide for the production of plastics, in particular polyalkylene carbonates (belonging to the class of polycarbonates), by copolymerization with epoxides has attracted a lot of attention due to the high application value thereof in terms of environmental impact and the prospects for technological development. However, the catalysts used for such a reaction generally have a low catalytic efficiency and/or a high production cost, thereby limiting the use thereof at an industrial level. The catalysts currently most commonly used in industry for this reaction are zinc dicarboxylic acids, especially zinc glutarate. For example, CN101468320A describes the synthesis of a composite material based on zinc oxide which is subsequently used, together with a dicarboxylic acid (such as glutaric acid) to obtain a catalyst used in the copolymerization of an epoxide with carbon dioxide. The synthesis of such a zinc oxide-based composite material described herein involves the use of a sulphuric acid solution and a heat treatment cycle to activate an inorganic matrix (such as: montmorillonite, mica or vermiculite) to which a solution of zinc nitrate, anhydrous ethanol and urea is added. The product thus obtained is then calcined until a ZnO/inorganic matrix complex is obtained. However, such a reaction involves the use of a solid phase (represented by the inorganic matrix) and a liquid phase which can potentially have numerous disadvantages such as high costs (related to the raw materials, the numerous synthesis steps and/or a potentially low yield) and, consequently, obtaining a catalyst which does not meet the desired requirements. With regard to polyalkylene carbonates, in particular the polypropylene carbonates (PPC) currently on the market, these are generally divided into polymers which have extremely low glass transition temperature values ($T_g$) (i.e., below 0 °C, for particular applications in the liquid state) or polymers with higher $T_g$ (i.e., above 35 °C, specifically studied and synthesised to increase the rigidity thereof and the mechanical performance associated therewith). For example, KR 2018 0075312 A relates to a polyethylene carbonate resin composition having improved mechanical properties and thermal stability together with excellent transparency. It is synthesized by a copolymerization reaction under a catalyst using carbon dioxide and epoxide as direct monomers, has excellent transparency, elongation and oxygen barrier properties, exhibits biodegradability, and can be used as a film. According to paragraph [0029] of KR 2018 0075312 A, the polyethylene carbonate can be produced by polymerizing a monomer containing an epoxide and carbon dioxide in the presence of an organic zinc catalyst. According to paragraph [0061] of

KR 2018 0075312 A, the polyethylene carbonate has a Mw of 120.000 to 150.000 g/mol. In example 1, a polyethylene carbonate having a Mw of 140.000 g/mol is prepared. In comparative example 1, the elongation at break amounts 638%. According to paragraph [0070], the organic zinc catalyst is a zinc dicarboxylate, and may be obtained by reacting a zinc precursor with an aliphatic dicarboxylic acid having 3 to 20 carbon atoms or an aromatic dicarboxylic acid having 8 to 40 carbon atoms. According to paragraph [0071], the zinc precursor may be zinc oxide, zinc hydroxide, zinc acetate (Zn (O2CCH3) 2), zinc nitrate (Zn (NO3) 2) or zinc sulfate. According to paragraph [0072], the zinc dicarboxylate organic zinc catalyst is a zinc glutarate catalyst.

**[0003]** Generally, in the current state of the art, in order to produce plastics with properties typical of soft and flexible plastics, polycarbonates are proposed on the market whose glass transition temperature is lowered by the addition of a plasticizer in order to produce a soft and flexible product. However, such a process has numerous disadvantages as it is not only complicated and expensive, but also potentially toxic and ineffective. In fact, the phenomena of diffusion and migration of plasticizers from polymer matrices are well known and involve limits and sometimes prohibitions on the use of such polymers, for example, in food packaging or in the biomedical sector. Furthermore, when these plasticized polymers are used in sectors where direct or indirect contact with food, animals, people or plants may occur, the plasticizer may exude from the material, thus resulting not only in the loss of the characteristics of the material itself but also in the release of compounds which are dangerous to human and animal health. Therefore, the need remains in the sector to provide a "green" polycarbonate whose production is simple, low cost, without the addition of plasticizers and has a minimum impact or preferably reduces the amount of greenhouse gases, characterized by being a thermoplastic polymer and having similar chemical-physical properties and mechanical performance to the common polymers with the highest flexibility in the sector and which, unlike these, is biodegradable, self-healing and has a high and immediate strain recovery. The present invention solves the problems of the known art by providing a polyalkylene carbonate obtained by a heterogeneous catalytic copolymerization reaction from $CO_2$ and an alkyl epoxide preferably containing at least 3 atoms of carbon, characterized by being biodegradable, with a high flexibility and ductility, good strength and/or sufficient rigidity, a high and immediate strain recovery percentage following an elongation, which has self-healing properties and with the desired $T_g$ values and percentage of ether bonds without the use of plasticizers. In particular, the present invention provides a polyalkylene carbonate characterized by self-healing properties and high strain recovery in combination with glass transition temperature values and intermediate percentage of ether bonds with respect to the polyalkylene carbonates currently and generally used industrially. The chemical-physical characteristics and mechanical properties of the polyalkylene carbonate according to the present invention are particularly advantageous for the purposes of the present invention, as they allow to have a thermoplastic polymer transformable with the techniques normally used with plastics of fossil origin and workable in different forms, thicknesses and products and therefore applicable to a variety of different uses, while maintaining the desired mechanical performance.

## SUMMARY OF THE INVENTION

**[0004]** The present invention relates to a polyalkylene carbonate obtained by a heterogeneous catalytic copolymerization reaction from $CO_2$ and an alkyl epoxide preferably containing at least 3 atoms of carbon, said polyalkylene carbonate having a weighted average molecular weight ($M_w$) comprised between 10 and 300 kg/mol and being characterised by having:

i) a percentage of ether bonds relative to the total of carbonate bonds and ether bonds comprised between 0 and 30%;
ii) self-healing properties in a time comprised between 1 minute and 4 days, preferably between 15 minutes and 4 days, preferably between 30 minutes and 4 days, preferably between 1 hour and 4 days, preferably between 1 hour and 8 hours, even more preferably between 1 minute and 3 hours, even more preferably between 15 minutes and 3 hours, even more preferably between 1 hour and 3 hours, even more preferably between 2 hours and 4 hours, even more preferably between 2 hours and 3 hours;
iii) a strain recovery comprised between 70 and 100% following a percentage elongation greater than 600%;
iv) a percentage elongation at break ($\varepsilon_b$) greater than 600%;
v) an elastic modulus (E) comprised between 50 and 1000 MPa.

**[0005]** Preferably, said polyalkylene carbonate is characterized in that it further possesses one or more of the following characteristics:

vi) a yield strength ($\delta y$) greater than 0.5 MPa; and/or
vii) an ultimate tensile strength ($\delta_b$) greater than 1 MPa; and/or
viii) a glass transition temperature ($T_g$) comprised between 0 and 35 °C.

**[0006]** Preferably, said heterogeneous catalytic copolymerization reaction comprises the steps of:

(a) reacting carbon dioxide with an alkyl epoxide preferably containing at least 3 atoms of carbon, preferably in the absence of an organic solvent, in the presence of a zinc dicarboxylate catalyst; said zinc dicarboxylate catalyst being obtained by reacting, with a dicarboxylic acid, preferably with a saturated aliphatic dicarboxylic acid, a zinc-based compound comprising a mixture of ZnO and a compound having the general formula (I):

$Zn_x(OH)_y(L)_z \cdot nH_2O$ Formula (I)

in which L is selected in the group consisting of: NOs, $CH_3CO_2$, $(SO_4)_{0,5}$, halide, and acetyl acetonate (AcAc),

$$2x = y + z;$$

in which
x is comprised between 1 and 5,
y is comprised between 1 and 8,
z is comprised between 1 and 2, and
n is comprised between 0 and 20.

**[0007]** According to an embodiment of the invention, said zinc-based compound is obtained by the steps of:

(b) providing a solution of a zinc precursor having the general formula $Zn(L)_2 \cdot nH_2O$, in which n and L are as defined in step (a);
(c) adding a solution of a base to said solution of a zinc precursor, thereby obtaining a precipitate;
(d) separating the precipitate from the supernatant solution and subjecting the solid thus separated to a heat treatment at a temperature comprised between 30 and 400 °C and for a period of time comprised between 20 minutes and 60 hours. According to a particularly preferred embodiment of the invention, said polyalkylene carbonate is polypropylene carbonate (PPC), obtained by a heterogeneous catalytic copolymerization reaction from $CO_2$ and propylene oxide (PO). The present invention also relates to the use of polyalkylene carbonate, preferably polypropylene carbonate, as previously described to prepare a product selected in the group consisting of: a film, a composite material and microspheres. Preferably, said polyalkylene carbonate is used in the cosmetic sector, in the biomedical sector, in the packaging sector, as a surface coating, to produce a composite material with natural fibres used in the production of disposable and biodegradable tableware, glasses, trays and cutlery, for a fabric finishing, to produce shrink film, mulch films and to produce moisture absorption devices.

## BRIEF DESCRIPTION OF THE FIGURES

**[0008]**

Figure 1 shows an XRD diffractogram of the different zinc-based compounds prepared as described in Example 1.
Figure 2 shows an XRD diffractogram of the different zinc glutarate catalysts prepared as described in Example 2.
Figure 3 shows an XRD diffractogram of the different zinc dicarboxylate catalysts prepared as described in Example 3.
Figure 4 shows an $^1$H-NMR spectrum of the polypropylene carbonate (sample PPC-12) obtained as described in Example 5.
Figure 5 shows a $^{13}$C-NMR spectrum of the polypropylene carbonate (sample PPC-12-3b) obtained as described in Example 5.
Figure 6 shows a photo of a film obtained by moulding the sample PPC-6 as described in Example 6, in which the transparency of the film can be appreciated.
Figure 7 shows a photo depicting the samples of the transversely cut PPC-6 material (left panel). In the right panel, the overlap between the two sections is shown, made on a sheet of graph paper by simply overlapping (without compressing and without heating) the central part by about 4 mm (indicated by the arrows).
Figure 8 shows the mechanical rigidity and extensibility characteristics of the PPC according to the present invention compared with the characteristics of the softer and more flexible polymers of fossil origin.
Figure 9 shows a photo depicting the composite material according to the present invention obtained by moulding a film of PPC film as described in Example 7 on a piece of cardboard.

## DETAILED DESCRIPTION OF THE INVENTION

**[0009]** For the purposes of the present invention, the term "film of polyalkylene carbonate" or "film of polypropylene

carbonate" refers to a film made with polyalkylene carbonate or with polypropylene carbonate, i.e., a film comprising or consisting of polyalkylene carbonate or polypropylene carbonate. For the purposes of the present invention, the term "microspheres of polyalkylene carbonate" or "microspheres of polypropylene carbonate" refers to microspheres made with polyalkylene carbonate or with propylene carbonate, i.e., microspheres comprising or consisting of polyalkylene carbonate or polypropylene carbonate. For the purposes of the present invention, the term "transparent" refers to the physical property of transparency, i.e., to the property which allows light to pass through a material. In particular, for the purposes of the present invention, a material is defined as "transparent" if it transmits light and allows the clear observation of an object therethrough. The term "translucent" refers to the physical property of translucency which allows light to pass through a material in a diffuse manner. In particular, for the purposes of the present invention, a material is defined as "translucent" if it transmits light by diffusing it but is not transparent, i.e., if said material does not allow the clear observation of an object observed therethrough.

**[0010]** For the purposes of the present invention, the weighted average molecular weight ($M_w$) and the number average molecular weight ($M_n$) were determined by gel permeation chromatography (GPC) as, for example, described in Example 5.

**[0011]** For the purposes of the present invention, the characteristics of extensibility and strain recovery, i.e., the strain recovery iii), the percentage elongation at break iv), the elastic modulus v), the yield strength vi) and the ultimate tensile strength vii), are determined by mechanical uniaxial tensile tests by means of an electromechanical dynamometer as, for example, described in Example 7.

**[0012]** For the purposes of the present invention, said time *"comprised between 1 minute and 4 days"* means that the self-healing properties of the polyalkylene carbonate according to the present invention are achieved/exerted (i.e., self-repair occurs) in a period of time equal to any value comprised between the aforesaid two extremes, such as 1 minute, 2 minutes, 3 minutes, 4 minutes, 5 minutes, 6 minutes, 7 minutes, 8 minutes, 9 minutes, 10 minutes, 11 minutes, 12 minutes, 13 minutes, 14 minutes, 15 minutes, 16 minutes, 17 minutes, 18 minutes, 19 minutes, 20 minutes, 21 minutes, 22 minutes, 23 minutes, 24 minutes, 25 minutes, 26 minutes, 27 minutes, 28 minutes, 29 minutes, 30 minutes, 31 minutes, 32 minutes, 33 minutes, 34 minutes, 35 minutes, 36 minutes, 37 minutes, 38 minutes, 39 minutes, 40 minutes, 41 minutes, 42 minutes, 43 minutes, 44 minutes, 45 minutes, 46 minutes, 47 minutes, 48 minutes, 49 minutes, 50 minutes, 51 minutes, 52 minutes, 53 minutes, 54 minutes, 55 minutes, 56 minutes, 57 minutes, 58 minutes, 59 minutes, 1 hour, 2 hours, 3 hours, 4 hours, 5 hours, 6 hours, 7 hours, 8 hours, 9 hours, 10 hours, 11 hours, 12 hours, 13 hours, 14 hours, 15 hours, 16 hours, 17 hours, 18 hours, 19 hours, 20 hours, 21 hours, 22 hours, 23 hours, 1 day, 2 days, 3 days, 4 days.

**[0013]** The same definition (appropriately adapted to individual cases) applies, for the purposes of the present invention, also to similar expressions of numerical ranges as described for the different embodiments of the present invention.

**[0014]** In an embodiment, the present invention relates to a polyalkylene carbonate obtained by a heterogeneous catalytic copolymerization reaction from $CO_2$ and an alkyl epoxide preferably containing at least 3 atoms of carbon, in which said polyalkylene carbonate has a weighted average molecular weight ($M_w$) comprised between 10 and 300 kg/mol, preferably between 30 and 300 kg/mol and is characterised by having:

- a percentage of ether bonds, relative to the total of carbonate bonds and ether bonds, comprised between 0 and 30%, preferably comprised between 3 and 30%, preferably between 3 and 25%;
- a strain recovery comprised between 70 and 100% following a percentage elongation greater than 600%;
- a percentage elongation at break ($\varepsilon_b$) greater than 600%;
- an elastic modulus (E) comprised between 50 and 1000 MPa.

**[0015]** According to a preferred embodiment, the present invention relates to a polyalkylene carbonate obtained by a heterogeneous catalytic copolymerization reaction from $CO_2$ and an alkyl epoxide preferably containing at least 3 atoms of carbon, in which said polyalkylene carbonate has a weighted average molecular weight ($M_w$) comprised between 10 and 300 kg/mol, preferably between 30 and 300 kg/mol and is characterised by having:

i) a percentage of ether bonds, relative to the total of carbonate bonds and ether bonds, comprised between 0 and 30%, preferably comprised between 3 and 30%, preferably between 3 and 25%;
ii) self-healing properties in a time comprised between 1 minute and 4 days, preferably between 15 minutes and 4 days, preferably between 30 minutes and 4 days, preferably between 1 hour and 4 days, preferably between 1 hour and 8 hours, even more preferably between 1 minute and 3 hours, even more preferably between 15 minutes and 3 hours, even more preferably between 1 hour and 3 hours, even more preferably between 2 hours and 4 hours, even more preferably between 2 hours and 3 hours;
iii) a strain recovery comprised between 70 and 100% following a percentage elongation greater than 600%;
iv) a percentage elongation at break ($\varepsilon_b$) greater than 600%;
v) an elastic modulus (E) comprised between 50 and 1000 MPa.

**[0016]** According to an embodiment, said percentage of ether bonds i) is comprised between 4 and 30%, preferably between 4 and 25%, preferably between 5 and 20%, preferably between 5 and 15%. According to an embodiment, said strain recovery iii) is comprised between 70 and 100%, preferably comprised between 75 and 100%, following a percentage elongation greater than 600%, preferably greater than 700%, more preferably greater than 800%, more preferably greater than 900%, even more preferably greater than 950%, more preferably comprised between 600 and 950%. According to an embodiment, said percentage elongation at break iv) is greater than 700%, more preferably greater than 800%, more preferably greater than 900%, even more preferably greater than 950%, more preferably comprised between 600 and 950%. According to an embodiment, said elastic modulus v) is preferably comprised between 100 and 1000 Mpa, more preferably between 100 and 600 Mpa, even more preferably between 100 and 500 MPa. For the purposes of the present invention, "self-healing properties" means that the polyalkylene carbonate according to the present invention is capable of being completely and independently healed, or has the ability to recover physical and structural integrity, lost following a cut and/or a break, with total or partial, preferably total restoration of the mechanical properties without applying any pressure and/or change in temperature conditions. In other words, the term "self-healing" means the ability of the material to completely and independently heal. More specifically, if defects such as through holes or tears occur, it is possible to seal the material by overlapping the edges which surround the area affected by the defect. The surfaces thus overlapped, thanks to the self-healing properties of the material, will first adhere and subsequently penetrate each other. For the purposes of the present invention, the complete (and independent) self-healing property as defined above is measured by tensile tests (*"lap shear joints"* overlapping edge adhesion evaluation method) and by delamination tests (delamination adhesion evaluation method) both performed by electromechanical dynamometer (as described, for example, in Example 8). Preferably the polyalkylene carbonate according to the present invention is characterised by having self-healing properties which lead to a complete and independent self-healing in a period of time comprised between 1 minute and 4 days, preferably between 15 minutes and 4 days, preferably between 30 minutes and 4 days, preferably between 1 hour and 4 days, preferably between 1 hour and 8 hours, even more preferably between 1 minute and 3 hours, even more preferably between 15 minutes and 3 hours, even more preferably between 1 hour and 3 hours, even more preferably between 2 hours and 4 hours, even more preferably between 2 hours and 3 hours. Advantageously, the aforesaid ether bond percentage values (which make the polyalkylene carbonate a ductile and workable material), in combination with the characteristics of self-healing and high strain recovery, elastic modulus and elongation, (these being new and desirable characteristics for a variety of different applications), make the polyalkylene carbonate of the present invention an extremely versatile material with desired mechanical performance in different fields of application. Preferably, said polyalkylene carbonate is characterized in that it further possesses one or more of the following characteristics:

vi) a yield strength ($\delta y$) greater than 0.5 Mpa, preferably greater than 1 Mpa; and/or

vii) an ultimate tensile strength ($\delta_b$) greater than 1 MPa, preferably greater than 2 MPa, even more preferably comprised between 2 and 20 MPa; and/or

viii) a glass transition temperature ($T_g$) comprised between 0 and 35 °C, preferably between 0 and 30 °C, preferably between 0 and 25 °C, preferably between 5 and 25 °C, preferably between 6 and 25 °C, preferably between 5 and 15 °C. According to an embodiment, said glass transition temperature is comprised between 4 and 35 °C, preferably between 4 and 20 °C, preferably between 4 and 25 °C, preferably between 4 and 15 °C, preferably between 5 and 15 °C. According to a preferred embodiment, said polyalkylene carbonate is characterized in that it further possesses at least two of the characteristics vi)-viii), preferably at least the characteristic vi) and the characteristic vii). According to a particularly preferred embodiment, said polyalkylene carbonate is characterized in that it further and simultaneously possesses all three characteristics vi)-viii). Without wishing to be bound by a specific theory, it is possible to claim that the presence of the above-mentioned ether bonds allows to obtain the desired values of glass transition temperature ($T_g$) described above and, consequently, the desired characteristics related to them. According to any of the embodiments described above, said polyalkylene carbonate is preferably an amorphous polymer, i.e., a polymer which does not have crystalline phases. According to any of the embodiments described above, said polyalkylene carbonate is preferably a thermoplastic polymer. According to any of the embodiments described above, said polyalkylene carbonate may comprise at least one additive selected in the group consisting of: a colourant, a pigment, a filler, preferably an inorganic filler, a natural fibre, wood flour, a crosslinker, a plasticizer, an antistatic, an antioxidant, an active pharmaceutical ingredient or a pharmaceutical formulation comprising it, an active cosmetic ingredient or a cosmetic formulation comprising it, a fertilizer, or a combination thereof. Preferably, said polyalkylene carbonate is thermally stable up to a temperature ≥ 190 °C, more preferably ≥ 200 °C, even more preferably at a temperature comprised between 190 and 250 °C.

**[0017]** According to a preferred embodiment, the polyalkylene carbonate of the present invention as described above is characterized by comprising an amount of cyclic alkylene carbonate > 0%, preferably between >0% and 5%, more preferably between 0.5 and 5%, even more preferably between 1% and 5% by weight. In other words, according to such

a preferred embodiment, the polyalkylene carbonate according to the present invention may contain a certain amount of cyclic alkylene carbonate as described above.

**[0018]** Without wishing to be bound by a specific theory, it can be claimed that, just as in the case of the ether bonds described above, the presence of said cyclic alkylene carbonate within the polyalkylene also contributes to obtaining the desired glass transition temperature ($T_g$) values described above and, consequently, also the other characteristics related to said glass transition temperature which make the carbonated polyalkylene of the present invention an extremely versatile material with desired performance in different fields of application.

**[0019]** According to a particularly preferred embodiment of the present invention, said polyalkylene carbonate is polypropylene carbonate (PPC). Preferably, according to such an embodiment, the polypropylene carbonate has the general formula (II):

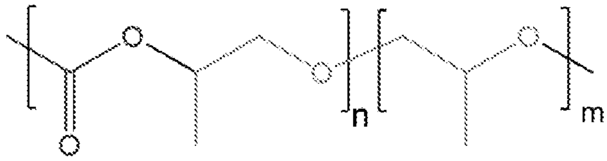

Formula (II)

in which m is comprised between 0 and 0.43n, preferably between 0.031n and 0.43n, preferably between 0.031n and 0.33n.

**[0020]** Preferably, according to such a preferred embodiment, the polypropylene carbonate (PPC) of the present invention as described above is characterized by comprising an amount of cyclic propylene carbonate (CPC) > 0%, preferably between >0% and 5%, more preferably between 0.5% and 5%, even more preferably between 1% and 5% by weight. In other words, according to such a preferred embodiment, the polypropylene carbonate according to the present invention may contain a certain amount of cyclic propylene carbonate (CPC) as described above.

**[0021]** Without wishing to be bound by a specific theory, it can be claimed that, just as in the case of the ether bonds described above, the presence of said cyclic propylene carbonate within the carbonated polypropylene also contributes to obtaining the desired glass transition temperature ($T_g$) values described above and, consequently, also the other characteristics related to said glass transition temperature which make the carbonated polypropylene of the present invention an extremely versatile material with desired performance in different fields of application.

**[0022]** According to an embodiment of the invention, said polyalkylene carbonate is obtained by a heterogeneous catalytic copolymerization reaction from $CO_2$ and an alkyl epoxide preferably containing at least 3 atoms of carbon. In the embodiment in which said polyalkylene carbonate is polypropylene carbonate, the alkyl epoxide used in the copolymerization reaction is propylene oxide. According to a preferred embodiment of the invention, said copolymerization reaction does not involve the addition of plasticizers. More specifically, according to an embodiment of the present invention, said heterogeneous catalytic copolymerization reaction comprises the steps of:

(a) reacting carbon dioxide with an alkyl epoxide preferably containing at least 3 atoms of carbon, preferably with propylene oxide, preferably in the absence of an organic solvent, in the presence of a zinc dicarboxylate catalyst; said zinc dicarboxylate catalyst being obtained by reacting, with a dicarboxylic acid preferably with a saturated aliphatic dicarboxylic acid, a zinc-based compound comprising a mixture of ZnO and a compound having the general formula (I):

$$Zn_x(OH)_y(L)_z \cdot nH_2O \qquad \text{Formula (I)}$$

in which L is selected in the group consisting of: NOs, $CH_3CO_2$, $(SO_4)_{0,5}$, halide, and acetyl acetonate (AcAc),

$$2x = y + z;$$

in which
x is comprised between 1 and 5,
y is comprised between 1 and 8,
z is comprised between 1 and 2, and
n is comprised between 0 and 20.

**[0023]** According to an embodiment of the invention, n is comprised between 0 and 10, or between 0 and 8, or between 0 and 6, or between 2 and 6. According to another embodiment of the invention, n is comprised between 1 and 20, or between 1 and 10, or between 2 and 20, or between 2 and 10. According to a particularly preferred embodiment, the obtaining of said zinc dicarboxylate catalyst optionally comprises, after the aforesaid reaction of said zinc-based compound with a dicarboxylic acid, also a step of carrying out a solid-liquid separation and subjecting the solid thus separated to a heat treatment at a temperature comprised between 90 and 150°C. Preferably said step of reacting said zinc-based compound with a dicarboxylic acid is carried out in a solvent, preferably in an aprotic solvent. Preferably said solvent is selected from the group consisting of: toluene, benzene, xylene (and the isomers thereof), mesitylene, chloroform, dichloromethane, and a combination thereof. More preferably, said step of reacting said zinc-based compound with a dicarboxylic acid is carried out at a reaction temperature comprised between 50 and 130 °C, preferably between 70 and 110 °C. Even more preferably, said step of reacting said zinc-based compound with a dicarboxylic acid is carried out for a period of time comprised between 12 and 48 hours, preferably between 18 and 36 hours.

**[0024]** According to a preferred embodiment of the invention, said dicarboxylic acid is a saturated aliphatic dicarboxylic acid i.e. containing neither aromatic groups nor double bonds. Preferably said saturated aliphatic dicarboxylic acid contains from 4 to 12 carbon atoms ($C_4$-$C_{12}$). According to a particularly preferred embodiment, said dicarboxylic acid is neither fumaric acid nor terephthalic acid.

**[0025]** Preferably, said zinc dicarboxylate catalyst is selected from the zinc dicarboxylate compounds having an alkyl chain between the two carboxyl groups. More preferably, said zinc dicarboxylate catalyst is selected from the group consisting of zinc glutarate (ZnGA), succinate (ZnSA) and zinc adipate (ZnAA); therefore, said dicarboxylic acid is selected from the group consisting of glutaric acid, succinic acid and adipic acid, respectively. According to a particularly preferred embodiment, said step (a) of reacting carbon dioxide with an alkyl epoxide preferably containing at least 3 atoms of carbon, preferably with propylene oxide, preferably in the absence of an organic solvent, in the presence of a zinc dicarboxylate catalyst, is carried out by heating at a temperature comprised between 30 and 150 °C, more preferably between 40 and 100 °C. Preferably, said step (a) is carried out at a pressure ($P_{CO2}$) comprised between 1 and 80 bar, preferably between 20 and 60 bar.

**[0026]** More preferably, said step (a) is carried out for a period of time comprised between 1 and 40 hours, preferably between 2 and 20 hours. According to a preferred embodiment, said zinc-based compound is obtained by the steps of:

(b) providing a solution of a zinc precursor having the general formula $Zn(L)_2 \cdot nH_2O$, in which n and L are as defined above (step (a));

(c) adding a solution of a base to said solution of a zinc precursor, thereby obtaining a precipitate;

(d) separating the precipitate from the supernatant solution and subjecting the solid thus obtained to a heat treatment at a temperature comprised between 30 and 400 °C and for a period of time comprised between 20 minutes and 60 hours. As demonstrated in the Examples section, and in particular as is clear from the data collected in Table 4 relating to yield and productivity, the Applicants have found that, thanks to the synthesis conditions of steps (b)-(c) and, in particular, thanks to the heat treatment of step (d), a zinc-based compound can be obtained comprising a mixture of ZnO and a compound of formula (I), i.e., an intermediate compound between the zinc precursor used in the synthesis, $Zn(L)_2 \cdot nH_2O$, and ZnO. Such a mixture allows to obtain a zinc dicarboxylate catalyst having a high catalytic activity and, consequently, a higher production yield of the polyalkylene carbonate, with respect to the use of a known catalysts obtained from pure ZnO. The temperature and time conditions of step (d) are suitably calibrated and modulated in order to obtain the mixture of ZnO and a compound of formula (I). In particular, if high temperatures (i.e., towards the upper end of the aforementioned range) are applied, the heat treatment times will be shorter (i.e., towards the lower end of the aforementioned range); while if lower temperatures (i.e., towards the lower end of the aforementioned range) are applied, the heat treatment times will be longer (i.e., towards the upper end of the aforementioned range). According to an embodiment of the invention, the heat treatment of step (d) is carried out at a temperature (T): 30°C < T < 90 °C and for a period of time (t): 20 hours < t ≤ 60 hours. According to an embodiment of the invention, the heat treatment of step (d) is carried out at a temperature (T): 90 °C ≤ T ≤ 150 °C and for a period of time (t): 20 minutes ≤ t < 20 hours. According to an embodiment of the invention, the heat treatment of step (d) is carried out at a temperature (T): 150 °C < T ≤ 400 °C and for a period of time (t): 20 minutes ≤ t < 20 hours, preferably 20 minutes ≤ t ≤ 15 hours. According to an embodiment of the invention, said zinc-based compound consists of a mixture of ZnO and of said compound having the general formula (I) as defined above. According to a preferred embodiment of the invention, L is nitrate (NOs). Preferably, the solution of a zinc precursor of step (b) has general formula $Zn(NO_3)_2 \cdot nH_2O$, with n as defined in step (a), more preferably $Zn(NO_3)_2 \cdot 6H_2O$. According to a preferred embodiment of the invention, said compound having general formula (I) has the following formula: $Zn_5(OH)_8(NO_3)_2 \cdot 2H_2O$.

**[0027]** According to an embodiment of the invention, said compound having general formula (I) has the following formula:

$Zn_3(OH)_4(NO_3)_2$.

**[0028]** According to an embodiment of the invention, said zinc-based compound comprises or consists of a mixture of ZnO and of one or more compounds having general formula (I) as described above. According to an embodiment, said solution of a base of step (c) is a solution of a base selected from the group consisting of: ammonia/ammonium hydroxide ($NH_4OH$), NaOH, KOH. Preferably, said solution of a base is an aqueous solution. More preferably, said solution of a base is an ammonia solution, preferably an aqueous ammonia solution. According to a preferred embodiment, when the heat treatment of step (d) is carried out at a temperature of 90 °C and for a time of 20 hours, a zinc-based compound is obtained comprising a mixture of ZnO and a compound having formula $Zn_5(OH)_8(NO_3)_2 \cdot 2H_2O$. According to a preferred embodiment, when the heat treatment of step (d) is carried out at a temperature of 120 °C and for a time of 20 hours, a zinc-based compound is obtained comprising a mixture of ZnO and a compound having formula $Zn_5(OH)_8(NO_3)_2 \cdot 2H_2O$, in which the relative amount of ZnO in the mixture is higher than the embodiment in which the heat treatment is carried out at 90 °C. According to an embodiment, when the heat treatment of step (d) is carried out at a temperature of 150 °C and for a time of 20 hours, a zinc-based compound is obtained comprising a mixture of ZnO and a compound having formula $Zn_5(OH)_8(NO_3)_2 \cdot 2H_2O$, in which the relative amount of ZnO in the mixture is higher than the embodiment in which the heat treatment is carried out at 90 °C. Preferably, according to any of the embodiments defined above, said zinc-based compound comprises said ZnO and said compound having general formula (II) in a mass ratio comprised between 0.1 and 10, preferably between 0.2 and 5. Without wishing to be bound by a specific theory, the Applicants have found that, thanks to the synthesis conditions of steps (a)-(c) and, in particular, thanks to the heat treatment of step (d), which allow to obtain a zinc-based compound comprising a mixture of ZnO and a compound having general formula (I) (i.e., of an intermediate compound between the zinc precursor used in the synthesis $Zn(L)_z \cdot nH_2O$ and ZnO), it is possible to obtain a zinc dicarboxylate catalyst having a particularly high catalytic activity for the copolymerization reaction of the polyalkylene carbonate, preferably of the polypropylene carbonate starting from $CO_2$ according to the present invention. As also demonstrated in the Examples section, the use of a different zinc-based compound with respect to the aforesaid mixture (such as commercial ZnO or ZnO as reported in literature) in the synthesis of the zinc dicarboxylate catalyst, results in a catalyst having a lower catalytic activity. Similarly, the use of different temperatures in the heat treatment of step (d) also results in a different zinc-based compound and which does not produce a zinc dicarboxylate catalyst having an equally high catalytic activity. Advantageously, as also demonstrated in the Examples below, the zinc dicarboxylate catalyst used in the synthesis of polyalkylene carbonate, preferably polypropylene carbonate, according to the present invention is characterized by having a catalytic efficiency towards the heterogeneous catalytic copolymerization reaction for the synthesis of polyalkylene carbonate starting from carbon dioxide and an alkyl epoxide preferably containing at least 3 atoms of carbon, which reaches an average productivity of 2.8 $g_{polyalkylene\ carbonate}/(g_{catalyst} \cdot hour)$ for example in the case where the epoxide is propylene oxide, using 0.5 g catalyst for every 50 mL of propylene oxide, at a $CO_2$ pressure of 40 bar with a reaction time of 20 hours at 80°C. Furthermore, as demonstrated in the Examples, the zinc dicarboxylate catalyst preferably used in the process for the synthesis of polyalkylene carbonate according to the present invention is characterised by possessing not only a high selectivity towards said synthesis but also a high degree of purity from XRD. In other words, said catalyst has zinc dicarboxylate and negligible zinc oxide impurities as the main crystalline phase observed in XRD.

**[0029]** Preferably the polyalkylene carbonate obtained by the aforesaid heterogeneous catalytic copolymerization reaction according to the present invention is advantageously obtained with a reaction yield which reaches 28.7 $g/g_{cat}$ in the case where for example the alkyl epoxide is propylene oxide and 0.5 g of catalyst are used for every 50 mL of propylene oxide, at a $CO_2$ pressure of 40 bar with a reaction time of 20 hours at 80°C. According to a particularly preferred embodiment, said step (a) of reacting carbon dioxide with an alkyl epoxide preferably containing at least 3 atoms of carbon, preferably with propylene oxide, preferably in the absence of an organic solvent, in the presence of a zinc dicarboxylate catalyst, is carried out by subjecting said alkyl epoxide, preferably said propylene oxide, to a dehydration pretreatment, preferably by dehydrating said alkyl epoxide, preferably said propylene oxide, with a molecular sieve, more preferably for a period of time of at least 12 hours. Without wishing to be bound by a specific theory, the Applicants have found that said dehydration pretreatment of alkyl epoxide is particularly advantageous, as it allows to obtain the polyalkylene carbonate according to the present invention with a doubled yield with respect to a process in which said alkyl epoxide is used in the reaction without said pretreatment. According to such an embodiment, said reaction yield reaches 56.2 $g/g_{cat}$ using for example as alkyl epoxide, propylene oxide and using 0.5 g of catalyst for every 50 mL of propylene oxide, at a $CO_2$ pressure of 40 bar with a reaction time of 20 hours at 80°C. Without wishing to be bound by a specific theory, the Applicants have found that the polyalkylene carbonate, preferably polypropylene carbonate, according to the present invention, thanks to the specific chemical-physical and mechanical characteristics previously described, is particularly advantageous and versatile for a variety of different applications. A further object of the present invention is also a use of the polyalkylene carbonate, preferably polypropylene carbonate, as previously described to prepare a product selected in the group consisting of: a film, a composite material and microspheres. Preferably, said

product is a biodegradable product. Preferably, said product allows the preparation of alternative products to conventional plastic and biodegradable and compostable plastic present on the market and can be used in the industrial, agricultural and consumer goods sectors. Preferably, said product is a transparent or translucent product. The present invention also relates to a use of said polyalkylene carbonate, preferably of said polypropylene carbonate:

- in the cosmetics sector, preferably for the preparation of microspheres to be used in and/or as a cosmetic formulation;
- in the biomedical sector as a bioerodible and/or biodegradable material for the controlled release of active ingredients;
- in the packaging sector, preferably for the packaging of a product, more preferably for packaging a food product;
- in industrial packing as a shrink film for wrapping machinery parts;
- in agriculture for the production of mulch films;
- as a surface coating or protection, preferably for coating a surface of a monument;
- for producing a composite material, preferably used in the production of disposable and biodegradable tableware, glasses, trays and cutlery;
- for a fabric finishing, preferably for waterproofing a fabric;
- for the production of a moisture absorption device.

**[0030]** Preferably, said cosmetic formulation is selected in the group consisting of: a solution, an emulsion, a cream, an oil, an ointment, a serum, a foam and a combination thereof; said cosmetic formulation containing at least one active cosmetic ingredient. A film of polyalkylene carbonate, preferably of polypropylene carbonate as described above, is a further object of the present invention. Preferably, said film is a biodegradable film. Preferably, said film is a transparent or translucent film. Preferably, said film is obtained by calendering, bubble film or moulding polyalkylene carbonate, preferably polypropylene carbonate, preferably by moulding with a press. According to a preferred embodiment, said film has a thickness comprised between 1 $\mu$m and 10 mm, preferably comprised between 10 $\mu$m and 1 mm, more preferably comprised between 50 and 400 $\mu$m. A further object of the present invention is a composite material comprising polyalkylene carbonate, preferably polypropylene carbonate, as previously described and at least a further material selected in the group consisting of: a natural fibre, cellulose, paper, cardboard, fabric, nonwoven fabric, and a combination thereof. According to an embodiment, said polyalkylene carbonate, preferably said polypropylene carbonate, is bonded to at least one layer of said at least one further material. According to a preferred embodiment, the bonding between said polyalkylene carbonate, preferably between said polypropylene carbonate, and said at least one layer of said at least one further material is carried out by means of an adhesive. According to an embodiment, said polyalkylene carbonate, preferably said polypropylene carbonate, is a film of polyalkylene carbonate, preferably of polypropylene carbonate, as previously described. Preferably, said film is moulded directly on said at least one layer of said at least one further material. Microspheres of polyalkylene carbonate, preferably of polypropylene carbonate as described above, are a further object of the present invention. Preferably, said microspheres are to be used in and/or as a cosmetic formulation.

## EXAMPLES

Example 1: preparation of the zinc-based compound (comprising a mixture of ZnO and the compound of general formula (I)) as a precursor for the synthesis of zinc carboxylate catalysts

**[0031]** The zinc-based compound comprising a mixture of ZnO and the compound of general formula (I) was synthesised according to the following.

**[0032]** $Zn(NO_3)_2 \cdot 6H_2O$ (29.8 g) was dissolved in Milli-Q water (1000 mL) to form a 0.1 mol/L zinc nitrate solution. An aqueous ammonia solution (13.6 g, 25% ammonia by weight) was added in drops to said zinc nitrate solution under vigorous mechanical stirring (at a rate of 400 rpm) until a suspension comprising a white precipitate was obtained. Said suspension was then subjected to an aging treatment at room temperature (RT) for 2 hours (2h) under stirring. Subsequently, it was filtered and washed with 1 L of water. The white powder thus obtained was subjected to a heat treatment at different temperatures (shown in Table 1) for 20 hours (20h). Each sample of zinc-based compound obtained following each heat treatment was classified as a "ZnO-X" sample (with X indicating the number of the experimental test performed and identifying the different samples), as follows.

**Table 1**

| ZnO-X | Source of zinc | Synthesis conditions | Heat-treatment temperature | Notes |
|---|---|---|---|---|
| ZnO | Commercial | | | Aldrich |

(continued)

| ZnO-X | Source of zinc | Synthesis conditions | Heat-treatment temperature | Notes |
|---|---|---|---|---|
| ZnO-01 | $Zn(NO_3)_2$+2 $NH_3{\cdot}H_2O$ | RT, 2h, 400 rpm | 180 °C | |
| ZnO-02 | $Zn(NO_3)_2$+2 $NH_3{\cdot}H_2O$ | RT, 2h, 400 rpm | 180 °C, 20h | Same conditions as ZnO-01, but not reactive in the synthesis. |
| ZnO-03 | $Zn(NO_3)_2$+2 $NH_3{\cdot}H_2O$ | RT, 2h, 400 rpm | 250 °C, 20h | |
| ZnO-04 | $Zn(NO_3)_2$+2 $NH_3{\cdot}H_2O$ | RT, 2h, 400 rpm | 180 °C, 20h | |
| ZnO-06 | $Zn(NO_3)_2$+2 $NH_3{\cdot}H_2O$ | RT, 2h, 400 rpm | RT | |
| ZnO-07 | $Zn(NO_3)_2$+2 $NH_3{\cdot}H_2O$ | RT, 2h, 400 rpm | 90 °C, 20h | mixture |
| ZnO-08 | $Zn(NO_3)_2$+2 $NH_3{\cdot}H_2O$ | RT, 2h, 400 rpm | 120 °C, 20h | mixture |
| ZnO-09 | $Zn(NO_3)_2$+2 $NH_3{\cdot}H_2O$ | RT, 2h, 400 rpm | 150 °C, 20h | mixture |
| ZnO-10 | $Zn(NO_3)_2$+2 $NH_3{\cdot}H_2O$ | RT, 2h, 400 rpm | 180 °C, 20h | Same conditions as ZnO-01 but shows a XRD diffractogram in which the $Zn_3(OH)_4(NO_3)_2$ signal is absent. |

**[0033]** From the XRD diffractograms shown in Figure 1, it can be seen how, among the different zinc-based compounds synthesized, the compounds subjected to a heat treatment at a temperature of 180 °C for 20 hours (20 h) (such as in the case of ZnO-02, ZnO-04 or ZnO-10) have the characteristic peaks of ZnO indicating that a transformation has occurred in zinc oxide. Conversely, in the absence of such a heat treatment (see sample ZnO-6), the compound does not comprise peaks which can be connected to the presence of ZnO but instead has characteristic peaks of zinc dihydroxide ($Zn(OH)_2$) and an intermediate species of zinc hydroxylate nitrate (zinc hydroxy-nitrate) having formula $Zn_5(OH)_8(NO_3)_2(H_2O)_2$. In the case of heat treatment at intermediate temperatures, it is possible to observe how these compounds show peaks related to the presence of zinc hydroxy-nitrate and peaks related to ZnO, the latter having a lower intensity with respect to a typical ZnO peak. This indicates a less defined structure. Without wishing to be bound by a specific theory, it is however possible to argue that the presence of a phase of zinc hydroxy-nitrate together with zinc oxide, with respect to a pure ZnO, is a favourable characteristic in the subsequent reaction with a dicarboxylic acid, preferably containing at least 3 atoms of carbon, to obtain a zinc dicarboxylate catalyst with high activity in the copolymerization between $CO_2$ and an epoxide. In light of this, it can therefore be concluded that, in the case of heat treatment at temperatures comprised between 90 and 150 °C, there is actually the formation of a mixture of ZnO (see characteristic peaks) and intermediate compounds having general formula (I), in particular:

in the case of ZnO-7, a mixture of ZnO and $Zn_5(OH)_8(NO_3)_2{\cdot}2H_2O$;

in the case of ZnO-8, a mixture of ZnO and $Zn_5(OH)_8(NO_3)_2{\cdot}2H_2O$, in which the relative amount of ZnO in the mixture is higher than in the sample ZnO-7:

in the case of ZnO-9, a mixture of ZnO and $Zn_5(OH)_8(NO_3)_2{\cdot}2H_2O$, in which the relative amount of ZnO in the mixture is higher than in the sample ZnO-8: said compounds have different percentages of ZnO and of said intermediate compounds having general formula (I). From such results it is possible to observe how, by increasing the temperature of the heat treatment, zinc hydroxy-nitrate (RT) is gradually transformed into zinc oxide (> 180 °C for 20 hours of treatment), passing through intermediate mixtures in the case of samples ZnO-07, Zn-08, Zn-09, or samples in which the heat treatment was carried out at a temperature of 90 °C, 120 °C and 150 °C for 20 hours, respectively. However, in the case of the diffractogram of compound ZnO-01 it is possible to note, in addition to the characteristic peak of zinc oxide, also a further peak, characteristic of an intermediate zinc hydroxylate compound (zinc hydroxy-nitrate) having the formula: $Zn_3(OH)_4(NO_3)_2$ (see Figure 1). Such a result indicates that the heat treatment of such a compound resulted in a zinc-based compound according to the present invention, i.e., comprising ZnO and an intermediate compound of general formula (I). In this case it may be hypothesized that the initially set heat-treatment conditions (180 °C for 20 hours) were actually carried out at a lower temperature or for a shorter period of time so as to avoid the complete transformation into ZnO (as instead occurred in the case of the other samples, see for example ZnO-10). The Applicants have found that the use of a zinc-based compound comprising ZnO and a compound having general formula (I) and synthesised in accordance with the process described above instead of a commercial ZnO (or obtained according to a different process) allows to obtain a zinc dicarboxylate catalyst with a higher heterogeneous catalytic copolymerization reaction activity of a polyalkylene carbonate starting from $CO_2$ and an epoxide, preferably of a polypropylene carbonate starting from $CO_2$ and propylene oxide. Without wishing to be bound by a specific theory, it is in fact possible to argue that the commercial ZnO (or obtained according to a different procedure) is resistant to the complete formation of the zinc dicarboxylate catalyst, thus resulting in a partially incomplete or in any case more difficult reaction with respect to that used in the present invention.

Example 2: preparation of the zinc glutarate catalyst

**[0034]** Several zinc glutarate catalyst samples were prepared using the different zinc-based compounds synthesized as in Example 1, according to the following steps and reaction diagram:

Diagram 1

**[0035]**

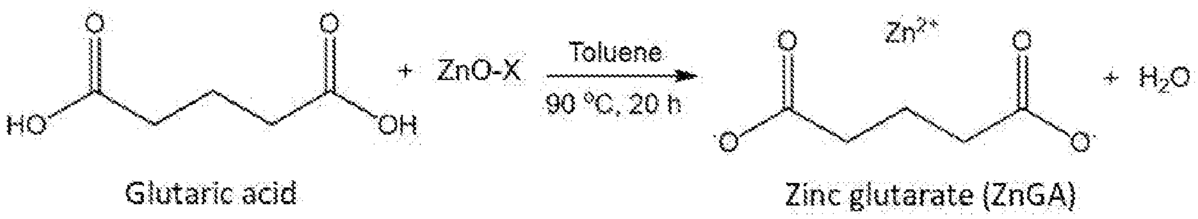


**[0036]** The zinc-based compound (ZnO-X, 2.0 g) and glutaric acid (3.26 g) were added in a glass flask. Subsequently toluene (150 mL) was added as the reaction solvent. The flask was then connected to a condenser and heated at 90 °C under stirring (600 rpm) for 24 hours until a suspension comprising a white precipitate was obtained. Said suspension was then allowed to cool to room temperature and the white precipitate was filtered, washed with ethanol (500 mL) and dried at 120 °C overnight. In some cases, the reaction was performed under supercritical $CO_2$ conditions (in a stainless steel autoclave). Each zinc glutarate catalyst sample obtained was classified as follows (Table 2).

**Table 2**

| ZnGA-X | Reagents | Temperature (°C) | Time (hours) | Solvent |
|---|---|---|---|---|
| ZnGA-03 | ZnO-01 + glutaric acid | 90 | 20 | Toluene |
| ZnGA-04 | ZnO-01 + glutaric acid | 90 | 20 | Toluene & supercritical $CO_2$ |
| ZnGA-07 | ZnO-02 + glutaric acid | 110 | 72 | Toluene |
| ZnGA-09 | ZnO-04 + glutaric acid | 90 | 24 | Toluene |
| ZnGA-11 | ZnO-06 + glutaric acid | 90 | 24 | Toluene |
| ZnGA-12 | ZnO-07 + glutaric acid | 90 | 24 | Toluene |
| ZnGA-13 | ZnO-08 + glutaric acid | 90 | 24 | Toluene |
| ZnGA-14 | ZnO-09 + glutaric acid | 90 | 24 | Toluene |
| ZnGA-15 | ZnO-10 + glutaric acid | 90 | 24 | Toluene |

Example 3: preparation of zinc succinate (ZnSA), adipate (ZnAA), zinc terephthalate (ZnTPA) and zinc fumarate (ZnFA) catalysts

**[0037]** With the ZnO-X samples prepared according to Example 1, and following the synthesis reported for ZnGA in Example 2 (appropriately adapting the dicarboxylic acid used for each catalyst: adipic acid, terephthalic acid and fumaric acid, respectively), Zinc adipate (ZnAA), zinc terephthalate (ZnTPA) and zinc fumarate (ZnFA) catalysts were also synthesised. For the ZnAA catalyst, a higher reaction temperature and a longer reaction time were necessary in order to promote the complete conversion of ZnO with adipic acid. Each sample obtained was classified as follows (Table 3).

**Table 3**

| Catalyst | Reagents | Temperature (°C) | Time (hours) | Solvent |
|---|---|---|---|---|
| ZnSA-01 | ZnO-01 + succinic acid | 90 | 20 | toluene |
| ZnAA-01 | ZnO-01 + adipic acid | 90 | 20 | toluene |
| ZnAA-02 | ZnO-01 + adipic acid | 110 | 72 | toluene |
| ZnTPA-01 | ZnO-04 + teraphthalic acid | 90 | 24 | toluene |
| ZnTPA-03 | ZnO-9 + teraphthalic acid | 90 | 24 | toluene |
| ZnFA-01 | ZnO-9 + fumaric acid | 90 | 24 | toluene |

Example 4: Catalytic tests: synthesis of polypropylene carbonate PPC

**[0038]** The catalysts obtained as described in Examples 2 and 3 were then tested in the copolymerization reaction, in heterogeneous phase, of polypropylene carbonate according to the following reaction diagram:

Diagram 2

**[0039]**

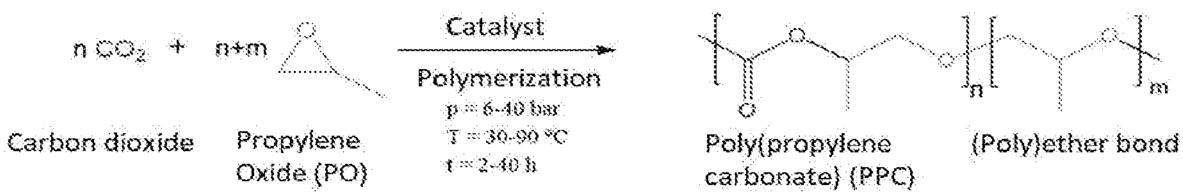


**[0040]** The zinc glutarate and zinc adipate catalysts showed the best catalytic activity in PPC synthesis. The highest productivity was recorded with the catalysts ZnGA-12, ZnGA-13 and ZnGA-14, or the catalysts obtained respectively with zinc-based compounds ZnO-07, ZnO-08 and ZnO-09, or zinc-based compounds subjected to a heat treatment at 90°, 120° and 150 ° C for 20 hours.

**[0041]** Among these, the best catalyst was ZnGA-12 whose productivity was further increased by using it together with the propylene oxide subject to a dehydration pretreatment. In order to compare the results obtained, other types of glutarates with various different metal ions (MgGA, $Al_2GA_3$, $TiGA_2$, $Fe_2GA_3$, CuGA) were also tested as catalysts. All of these catalysts showed almost no catalytic activity, suggesting that it is the zinc ion which plays the key role of active site for such a type of reaction. The zinc glutarate catalysts ZnGA-07, ZnGA-08, ZnGA-09 and ZnGA-15 (i.e., respectively obtained with the zinc-based compounds ZnO-02, ZnO-03, ZnO-04 and ZnGA-10 subjected to heat treatment at 180 °C or 250 °C for 20 hours), and zinc glutarate catalyst ZnGA-11 (i.e., obtained with the zinc-based compound ZnO-06, i.e., a zinc-based compound not subjected to heat treatment [RT]) showed no catalytic activity. With regard to the zinc dicarboxylate catalysts with different dicarboxylates (adipate, succinate, fumarate and terephthalate), ZnAA and ZnSA showed some activity. The specific conditions of synthesis and the results obtained for each sample are summarized in Table 4 below.

Table 4

| Catalysts | Temperature °C | Time (hours) | CO2 pressure | PPC yield (g/ gcat.) | Productivity (g/ gcat*hour) | PPC |
|---|---|---|---|---|---|---|
| ZnGA-03 | 80 | 20 | 40 | 30.0 | 1.50 | PPC-5 (15.0 g) |
| ZnGA-04 | 80 | 20 | 40 | 31.0 | 1.55 | PPC-6 (15.5 9) |
| ZnSA-01 | 80 | 20 | 40 | 7.2 | 0.36 | PPC-9 (3.6 9) |
| ZnAA-02 | 80 | 20 | 40 | 46.0 | 2.30 | PPC-10 (23.0 g) |
| CuGA | 80 | 20 | 40 | < 1 | < 0.05 | - |
| $Fe_2GA_3$ | 80 | 20 | 40 | < 1 | < 0.05 | - |
| $TiGA_2$ | 80 | 20 | 40 | < 1 | < 0.05 | - |
| $Al_2GA_3$ | 80 | 20 | 40 | < 1 | < 0.05 | - |
| MgGA | 80 | 20 | 40 | < 1 | < 0.05 | - |
| ZnGA-3+ZnAA-2 | 80 | 20 | 40 | 29.0 | 1.45 | PPC-11 (14.5 g) |
| ZnGA-07 | 80 | 20 | 40 | < 1 | < 0.05 | - |
| ZnGA-09 | 80 | 20 | 40 | < 1 | < 0.05 | - |
| ZnGA-11 | 80 | 20 | 40 | < 1 | < 0.05 | - |
| ZnGA-12 | 80 | 20 | 40 | 28.7 | 1.44 | P PC-12 |
| ZnGA-13 | 80 | 20 | 40 | 12.4 | 0.62 | P PC-13 |
| ZnGA-14 | 80 | 20 | 40 | 18.7 | 0.94 | P PC-14 |
| ZnGA-15 | 80 | 20 | 40 | 7.6 | 0.38 | P PC-15 |
| ZnTPA-1 | 80 | 20 | 40 | < 1 | < 0.05 | - |
| ZnTPA-3 | 80 | 20 | 40 | < 1 | < 0.05 | - |
| ZnFA-1 | 80 | 20 | 40 | < 1 | < 0.05 | - |
| ZnAA-02 | 80 | 20 | 40 | 8.6 | 0.43 | PPC-10-2b-3b |
| ZnAA-02 | 80 | 20 | 40 | 8.6 | 0.43 | PPC-10-2b-3b |
| ZnAA-02 | 80 | 20 | 40 | 6.4 | 0.32 | P PC-10-4b (3.2 9) |
| ZnGA-12 | 80 | 20 | 40 | 56.2 | 2.8 | PPC-12-2b (28.1 g) |
| ZnGA-12 | 80 | 20 | 40 | 43.6 | 2.2 | PPC-12-3b (21.8 g) |

**[0042]** Reaction conditions: catalyst amount, 0.5 g; PO volume, 50 mL; mechanical stirring rate, 300 rpm. *These two PPC samples were mixed to form a single sample PPC-10-2b-3b. **PO was dried by 5Å molecular sieve for > 24 hours.

Example 5: Chemical-physical analysis

**[0043]** The PPCs obtained as described in Example 4 were characterized in order to assess the molecular characteristics, selectivity and percentage of ether bonds thereof (Table 5). The weighted average molecular weight ($M_w$) and the number average molecular weight ($M_n$) were determined by gel permeation chromatography (GPC) (chromatograph Erma Inc.) and Shodex KF columns. The calibration curve was obtained with 16 narrowly distributed polystyrene standards (Polymer Laboratories) with a molar mass comprised between $3.18 \times 10^6$ and 162 g/mol. The percentage of polypropylene carbonate (PPC) with respect to cyclic propylene carbonate (CPC) and the percentage of ether units with respect to polycarbonate units were evaluated by $^1$H-NMR spectrometry (see for example Figure 4).

**Table 5**

| PPC | Selectivity in solid material obtained (%) | | Ether bond (%) | Mw | Mn |
|---|---|---|---|---|---|
| | PPC | CPC | | | |
| PPC-5 | 98.3 | 1.7 | 7.9 | 216k | 35.6k |
| PPC-6 | 98.5 | 1.5 | 7.8 | 124k | 18.6k |
| PPC-10 | 96.5 | 3.5 | 6.9 | 116k | 33.7k |
| PPC-11 | - | - | - | - | - |
| PPC-12 | 97.9 | 2.1 | 9.2 | 109k | 9.7k |
| PPC-13 | 98.7 | 1.3 | 9.0 | 186k | 8.6k |
| PPC-14 | 98.1 | 1.9 | 7.1 | 104k | 16k |
| PPC-15 | 98.2 | 1.8 | 5.2 | 58k | 6k |
| PPC-10-4b | 98.4 | 1.6 | 3.4 | 14k | 11k |
| PPC-12-3b | 98.8 | 1.2 | 8.9 | 76k | 2k |

Example 6: Thermo-mechanical characterization

**[0044]** The thermal properties of the PPCs prepared according to Example 4 were evaluated by Differential Scanning Calorimeter (DSC) (DSC Q100, TA Instruments, New Castle, DE, USA) by performing three successive heating and cooling scans and further heating. The calorimetric properties were evaluated in the third scan. It was observed that all the polymers obtained by the process according to the present invention are amorphous. No transition indicative of the presence of crystalline phase or recrystallization of the material was found in any sample. For all the samples, a single glass transition temperature ($T_g$) was highlighted at values comprised between -5 and 25°C. The thermal stability of the PPCs was evaluated in air by thermogravimetry (TGA) (TGA Q500, TA Instruments, New Castle, DE, USA) using high-resolution dynamic method. It was observed that the degradation of the PPCs starts significantly only at temperatures above 200-210 °C, so there is no impediment to the transformation and forming thereof with the methods usually used for polymers and plastics. By way of example, the samples PPC-5, PPC-6 and PPC-10 were subjected to compression moulding by means of a press (Collin P200E, Maitenbeth Germany) with a special time/temperature/pressure (3 min/180 °C/30 atm) programme in order to obtain thin films. All the films have homogeneity, good to excellent transparency and thicknesses varying from about 100 to 250 $\mu$m (as shown for example in Figure 6). The films were then cut to obtain specimens for the mechanical tests. The uniaxial tensile test was carried out with an electromechanical dynamometer (Instron model 3366). The Elastic Modulus (E), yield strength ($\delta$y), elongation at break ($\varepsilon_b$) and the load corresponding to 900% elongation ($\delta_{900\%}$) were evaluated on specimens 0.2 mm thick, 10 mm wide and with 80 mm useful length at a speed of 200 mm/min. Furthermore, the specimens were mounted on a paper frame to facilitate gripping at the traction machine. From such tests it was possible to observe that, if stressed in traction, the samples stretch by more than 900% (beyond the limits of the machine used) but do not break, and for this reason the load corresponding to 900% elongation was calculated for each sample instead of the ultimate tensile strength.

**[0045]** The results are shown in the following table (Table 6).

**Table 6**

| Sample | E (Mpa) | $\delta y$ (Mpa) | $\varepsilon_b$ (%) | $\delta_{900\%}$ (Mpa) |
|---|---|---|---|---|
| PPC-5 | 139±34 | 0.85±0.11 | > 910 | 2.91±0.18 |
| PPC-6 | 121±31 | 0.72±0.09 | > 910 | 2.28±0.17 |
| PPC-10 | 128±35 | 1.1±0.01 | > 910 | 3.03±0.08 |

**[0046]** Furthermore, when compared with known polymers, as can be seen in Figure 8, the mechanical characteristics of the polypropylene carbonates according to the present invention are comparable to those of the softer and more flexible polymers of petrochemical origin and their extensibility can reach values which cannot be reached by other polymers known in the current state of the art.

Example 7: Extensibility and strain recovery of the films in PPC

**[0047]** The materials were also subjected to uniaxial tensile tests using an electromechanical dynamometer (Instron Model 3366) to evaluate the extensibility and strain recovery characteristics. The films obtained by compression as described above were cut to obtain specimens of 0.2 mm thickness, 10 mm width and useful length equal to 80 mm which were then mounted on a paper frame to facilitate the gripping of the traction machine. The tensile test was performed at a speed of 200 mm/min. The specimens were subjected to an elongation of 920% (about 73 cm) without breaking, then they were released from the traction machine and it was possible to verify an immediate and almost complete recovery of the original size. From the initial and final length, the strain recovery was thus estimated according to the following formula:

$$[L_i - (L_f - L_i)] \cdot 100/L_i$$

**[0048]** In which $L_i$ is the initial length of the specimen (before the elongation test) and $L_f$ is the length following elongation and release. As shown in the following table (Table 7), the samples have a strain recovery between 80% and over 90%.

**Table 7**

| Sample | Specimen length before test ($L_i$) | Specimen length after test ($L_f$) | Strain recovery (%) |
|---|---|---|---|
| PPC5 | 8 | 8.65 | 92 |
| PPC6 | 8 | 9.2 | 85 |
| PPC10 | 8 | 9.0 | 87.5 |

Example 8: Self-healing of films in PPC and evaluation of the time required for complete self-healing

**[0049]** The samples were also subjected to mechanical uniaxial tensile tests after physical-mechanical damage had been done thereto in order to evaluate the self-healing capacity of the materials. In a first set of tests, the specimens of sample PPC-6 were cut transversely and the two pieces thus obtained were placed, on a sheet of graph paper, by simply overlapping (without compressing and/or without heating) the central part so as to have an overlap of about 4 mm (Figure 7) and obtain a single specimen. The uniaxial tensile test was then carried out on these samples after 4 days and after having exactly evaluated the length of the overlap with an optical microscope. The elastic modulus (E, MPa), yield strength ($\delta_y$, MPa), ultimate tensile strength ($\delta_b$, MPa) and elongation at break ($\varepsilon_b$, %) were then calculated for each specimen obtained from sample PPC-6.

**[0050]** The cut previously made was no longer visible, the samples were completely healed and, after the uniaxial tensile test, no yielding was observed in the area corresponding to the self-healing. The mechanical characteristics measured after the self-healing are comparable to those of the original specimens.

**[0051]** The results are shown in the following table (Table 8).

**Table 8**

| Specimen | E (MPa) | $\delta y$ (MPa) | $\varepsilon_b$ (%) | $\delta_b$ (MPa) |
|---|---|---|---|---|
| specimen 0 | 251.8 | 2.86 | 617.3 | 4.37 |

(continued)

| Specimen | E (MPa) | δy (MPa) | $\varepsilon_b$ (%) | $\delta_b$ (MPa) |
|---|---|---|---|---|
| specimen 1 | 415.7 | 2.38 | 684.0 | 3.52 |
| specimen 2 | 455.2 | 2.53 | 830.2 | 4.10 |
| specimen 3 | 335.6 | 2.26 | 795.0 | 4.05 |
| specimen 4 | 316.8 | 2.02 | 838.2 | 3.88 |
| specimen 5 | 312.0 | 1.77 | 732.6 | 2.93 |
| specimen 6 | 360.2 | 1.99 | 577.8 | 2.59 |
| specimen 7 | 236.1 | 1.33 | 847.2 | 3.30 |

**[0052]** Despite slight fluctuations due to the different degree of overlap, the results confirm that films printed with the polypropylene carbonate according to the present invention have excellent self-healing capabilities.

**[0053]** A second set of experiments was developed to assess the effectiveness of the self-healing mechanism and the minimum time required to achieve complete self-healing. Such investigations were conducted according to two mechanical characterisation methods:

- overlapping edge adhesion evaluation method ("lap shear joints"): two strips of material with a width of 10 mm and a length of about 40 mm were overlapped on each other for a length of 5 mm to form a single strip with a length of about 75 mm and the same width and thickness of the starting strips; the strip thus obtained was then subjected to a tensile test on the electromechanical dynamometer to evaluate the effectiveness of the seal;
- delamination adhesion evaluation method: two strips of material with a width of 10 mm and a length of about 80 mm were overlapped on each other for a length of 40 mm to form a specimen, half consisting of the overlapping portions, half of the nonoverlapping edges to be able to undergo delamination tests on the electromechanical dynamometer and evaluate the effectiveness of the seal.

**[0054]** The overlapping of the two areas was carried out at room temperature and without exerting significant pressure on the two edges, if not that of a delicate manual pressure to favour good contact between the overlapping surfaces. Both test modes were performed using an electromechanical dynamometer (Instron, Mod. 3366), operating at room temperature and at a speed of 50 mm/min.

**[0055]** To verify the minimum time necessary to have an effective seal, the tests were carried out at different times, varying between 10 minutes and a week, after the overlapping of the two edges ("sealing time"). The results obtained are summarised in Table 9 and show two modes of yielding:

- for "short" times, ranging from a few minutes to 2/3 hours, the material shows an adhesive-type break which occurs in the sealed area due to the detachment of the two edges from each other;
- for longer times, greater than 2/3 hours, the material shows a cohesive-type break, which occurs in the areas outside the sealed area and confirms the actual self-sealing of the two edges.

**[0056]** In fact, the self-healing mechanism occurs according to a two-stage process: in a first stage, using a moderate "tackyness" of the material, the two edges simply adhere to each other; in a second stage, which both tests have shown to occur for times greater than 2/3 hours, the two edges interpenetrate, self-sealing.

**Table 9**

| Sealing time | "Lap shear joints" method | Delamination method |
|---|---|---|
| 10 minutes | Adhesive break, inside the sealed area | Adhesive break, inside the sealed area |
| 30 minutes | Adhesive break, inside the sealed area | Adhesive break, inside the sealed area |
| 1 hour | Adhesive break, inside the sealed area | Adhesive break, inside the sealed area |
| 2 hours | Cohesive break, outside the sealed area | Cohesive break, outside the sealed area |
| 1 day | Cohesive break, outside the sealed area | Cohesive break, outside the sealed area |
| 4 days | Cohesive break, outside the sealed area | Cohesive break, outside the sealed area |

(continued)

| Sealing time | "Lap shear joints" method | Delamination method |
|---|---|---|
| 1 week | Cohesive break, outside the sealed area | Cohesive break, outside the sealed area |

Example 9: PPC film moulding and gluing test

**[0057]** The sample PPC10 obtained as described in Example 4 was moulded at a temperature of 80°C and a pressure of 30 bar with a compression press on a piece of cardboard having dimensions 20x20, forming a film having a thickness of 120 μm. In order to ensure better adhesion, 600 mg of glue was manually applied to the cardboard prior to moulding. As can be seen from the photo shown in Figure 9, the PPC film is transparent and perfectly adhered to the surface of the cardboard, thus forming a real composite material according to the present invention. A similar result was obtained with the moulding procedure at a temperature of 80 °C and a pressure of 30 bar without the use of glues.

## Claims

1. A polyalkylene carbonate obtained through a heterogeneous catalytic copolymerization reaction from $CO_2$ and an alkyl epoxide containing at least 3 atoms of carbon, wherein said polyalkylene carbonate has a weighted average molecular weight ($M_w$) comprised between 10 and 300 kg/mol determined as indicated in the specification and is **characterised by** having:

   i) a percentage of ether bonds relative to the total of carbonate bonds and ether bonds comprised between 0 and 30%, determined as indicated in the specification;
   ii) self-healing properties in a time comprised between 1 minute and 4 days, wherein the self-healing properties are defined and evaluated as indicated in the specification;
   iii) a strain recovery comprised between 70 and 100% following a percentage elongation greater than 600%, determined as indicated in the specification,
   iv) a percentage elongation at break ($\varepsilon_b$) greater than 600%, determined as indicated in the specification;
   v) an elastic modulus (E) comprised between 50 and 1000 MPa, determined as indicated in the specification.

2. The polyalkylene carbonate according to claim 1, **characterised in that** it further possesses at least one of the following characteristics:

   vi) a yield strength ($\delta y$) greater than 0.5 MPa, determined as indicated in the specification; and/or
   vii) an ultimate tensile strength ($\delta_b$) greater than 1 MPa, determined as indicated in the specification; and/or
   viii) a glass transition temperature ($T_g$) comprised between 0 and 35 °C, determined as indicated in the specification.

3. The polyalkylene carbonate according to claim 1 or 2, wherein said heterogeneous catalytic copolymerization reaction comprises the steps of:

   (a) reacting carbon dioxide with an alkyl epoxide containing at least 3 atoms of carbon, preferably in the absence of an organic solvent, in the presence of a zinc dicarboxylate catalyst; said zinc dicarboxylate catalyst being obtained by reacting, with a saturated aliphatic dicarboxylic acid, a zinc-based compound comprising a mixture of ZnO and a compound having the general formula (I):

   $$Zn_x(OH)_y(L)_z \cdot nH_2O \qquad \text{Formula (I)}$$

   wherein L is selected in the group consisting of: NOs, $CH_3CO_2$, $(SO_4)_{0,5}$, halide, and acetyl acetonate (AcAc),

   $$2x = y + z;$$

   wherein
   x is comprised between 1 and 5,
   y is comprised between 1 and 8,

z is comprised between 1 and 2, and
n is comprised between 0 and 20.

**4.** The polyalkylene carbonate according to claim 3, wherein said zinc-based compound is obtained by the steps of:

(b) providing a solution of a zinc precursor having the general formula $Zn(L)_2 \cdot nH_2O$, wherein n and L are as defined in step (a);
(c) adding a solution of a base to said solution of a zinc precursor, thereby obtaining a precipitate;
(d) separating the precipitate from the supernatant solution and subjecting the solid thus obtained to a heat treatment:

- at a temperature (T): 30 °C < T < 90 °C and for a period of time (t): 20 hours < t ≤ 60 hours; or
- at a temperature (T): 90 °C ≤ T ≤ 150 °C and for a period of time (t): 20 minutes ≤ t ≤ 20 hours; or
- at a temperature (T): 150 °C < T ≤ 400 °C and for a period of time (t): 20 minutes ≤ t < 20 hours.

**5.** The polyalkylene carbonate according to any one of the preceding claims, wherein said polyalkylene carbonate is polypropylene carbonate (PPC) having the general formula (II):

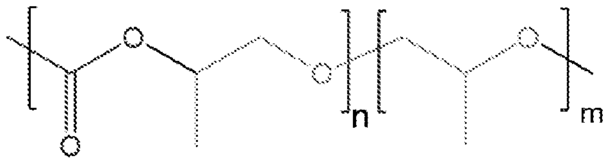

(II)

wherein m is comprised between 0 and 0.43n, preferably between 0.031n and 0.43n, preferably between 0.031n and 0.33n;
and wherein said alkyl epoxide used in step (a) is propylene oxide.

**6.** Use of the polyalkylene carbonate according to any one of the preceding claims to prepare a product selected in the group consisting of: a film, a composite material and microspheres.

**7.** Use of the polyalkylene carbonate according to any one of the preceding claims:

- in the cosmetics sector, preferably for the preparation of microspheres to be used in and/or as a cosmetic formulation;
- in the biomedical sector as a bioerodible and/or biodegradable material for the controlled release of active ingredients;
- in the packaging sector, preferably for the packaging of a product, more preferably for packaging a food product;
- in industrial packing as a shrink film for wrapping machinery parts;
- in agriculture for the production of mulch films;
- as a surface coating or protection, preferably for coating a surface of a monument;
- for producing a composite material, preferably used in the production of disposable and biodegradable tableware, glasses, trays and cutlery;
- for a fabric finishing, preferably for waterproofing a fabric;
- for the production of a moisture absorption device.

**8.** A film of polyalkylene carbonate according to any one of claims 1-5, said film preferably being a transparent or translucent film and preferably having a thickness comprised between 1 μm and 10 mm.

**9.** A composite material comprising the polyalkylene carbonate according to any one of claims 1-5 and at least a further material selected in the group consisting of: natural fibre, cellulose, paper, cardboard, fabric, nonwoven fabric, and a combination thereof, said polyalkylene carbonate preferably being a film of polyalkylene carbonate, said film preferably being bonded to at least one layer of said at least one further material.

## Patentansprüche

1. Polyalkylencarbonat, erhalten durch eine heterogene katalytische Copolymerisationsreaktion aus $CO_2$ und einem Alkylepoxid, das mindestens 3 Kohlenstoffatome enthält, wobei das Polyalkylencarbonat ein gewichtetes durchschnittliches Molekulargewicht ($M_w$ ) zwischen 10 und 300 kg/mol aufweist, bestimmt wie in der Beschreibung angegeben, und **dadurch gekennzeichnet ist, dass** es aufweist:

   i) einen prozentualen Anteil an Etherbindungen im Verhältnis zur Gesamtheit der Carbonat- und Etherbindungen zwischen 0 und 30 %, der wie in der Spezifikation angegeben bestimmt wird;
   ii) Selbstheilungseigenschaften in einer Zeitspanne zwischen 1 Minute und 4 Tagen, wobei die Selbstheilungseigenschaften wie in der Spezifikation angegeben definiert und bewertet werden;
   iii) eine Dehnungserholung zwischen 70 und 100 % nach einer prozentualen Dehnung von mehr als 600 %, die wie in der Spezifikation angegeben bestimmt wird,
   iv) eine prozentuale Bruchdehnung ($\varepsilon_b$ ) von mehr als 600 %, bestimmt nach den Angaben in der Spezifikation;
   v) ein Elastizitätsmodul (E) zwischen 50 und 1000 MPa, bestimmt nach den Angaben in der Spezifikation.

2. Polyalkylencarbonat nach Anspruch 1, **dadurch gekennzeichnet, dass** es außerdem mindestens eine der folgenden Eigenschaften besitzt:

   vi) eine Streckgrenze ($\delta$y) von mehr als 0,5 MPa, bestimmt nach den Angaben in der Spezifikation, und/oder
   vii) eine Zugfestigkeit ($\delta_b$ ) von mehr als 1 MPa, bestimmt nach den Angaben in der Spezifikation; und/oder
   viii) eine Glasübergangstemperatur ($T_g$ ) zwischen 0 und 35 °C, die wie in der Spezifikation angegeben bestimmt wird.

3. Polyalkylencarbonat nach Anspruch 1 oder 2, wobei die heterogene katalytische Copolymerisationsreaktion die folgenden Schritte umfasst:

   (a) Umsetzen von Kohlendioxid mit einem Alkylepoxid, das mindestens 3 Kohlenstoffatome enthält, vorzugsweise in Abwesenheit eines organischen Lösungsmittels, in Gegenwart eines Zinkdicarboxylat-Katalysators; wobei der Zinkdicarboxylat-Katalysator durch Umsetzen einer Verbindung auf Zinkbasis, die ein Gemisch aus ZnO und einer Verbindung der allgemeinen Formel (I) umfasst, mit einer gesättigten aliphatischen Dicarbonsäure erhalten wird:

   $Zn_x(OH)_y(L)_z$-$nHO_2$ Formel (I)

   worin L ausgewählt ist aus der Gruppe bestehend aus: $NO_3$ , $CH_3$ $CO_2$ , $(SO\ )_{40,5}$ , Halogenid, und Acetylacetonat (AcAc),

   $$2x = y + z;$$

   wobei
   x liegt zwischen 1 und 5,
   y umfasst einen Wert zwischen 1 und 8,
   z liegt zwischen 1 und 2, und
   n umfasst einen Wert zwischen 0 und 20.

4. Polyalkylencarbonat nach Anspruch 3, wobei die Verbindung auf Zinkbasis durch die folgenden Schritte erhalten wird:

   (b) Bereitstellen einer Lösung eines Zinkvorläufers mit der allgemeinen Formel $Zn(L)_2$ -$nH_2$ O, worin n und L wie in Schritt (a) definiert sind;
   (c) Zugabe einer Basenlösung zu der Lösung eines Zinkvorläufers, wodurch ein Niederschlag erhalten wird;
   (d) Abtrennung des Niederschlags von der überstehenden Lösung und Wärmebehandlung des so erhaltenen Feststoffs:

   - bei einer Temperatur (T): 30 °C < T < 90 °C und für eine Zeitspanne (t): 20 Stunden < t $\leq$ 60 Stunden; oder
   - bei einer Temperatur (T): 90 °C s T $\leq$ 150 °C und für eine Zeitspanne (t): 20 Minuten $\leq$ t $\leq$ 20 Stunden; oder
   - bei einer Temperatur (T): 150 °C < T $\leq$ 400 °C und für eine Zeitspanne (t): 20 Minuten $\leq$ t < 20 Stunden.

5. Polyalkylencarbonat nach einem der vorhergehenden Ansprüche, wobei das Polyalkylencarbonat Polypropylencarbonat (PPC) mit der allgemeinen Formel (II) ist:

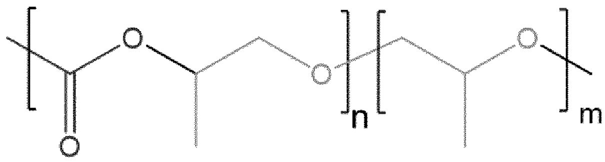

(II)

wobei m zwischen 0 und 0,43n, vorzugsweise zwischen 0,031n und 0,43n, vorzugsweise zwischen 0,031n und 0,33n liegt;
und wobei das in Schritt (a) verwendete Alkylepoxid Propylenoxid ist.

6. Verwendung des Polyalkylencarbonats nach einem der vorhergehenden Ansprüche zur Herstellung eines Produkts, ausgewählt aus der Gruppe bestehend aus: einem Film, einem Verbundmaterial und Mikrokugeln.

7. Verwendung des Polyalkylencarbonats nach einem der vorangegangenen Ansprüche:

- im Kosmetikbereich, vorzugsweise zur Herstellung von Mikrokugeln, die in und/oder als kosmetische Formulierung verwendet werden;
- im biomedizinischen Bereich als bioerodierbares und/oder biologisch abbaubares Material für die kontrollierte Freisetzung von Wirkstoffen;
- im Verpackungsbereich, vorzugsweise für die Verpackung eines Produkts, vorzugsweise für die Verpackung eines Lebensmittels;
- in der Industrieverpackung als Schrumpffolie zum Umwickeln von Maschinenteilen;
- in der Landwirtschaft für die Herstellung von Mulchfolien;
- als Oberflächenbeschichtung oder -schutz, vorzugsweise zur Beschichtung einer Oberfläche eines Denkmals;
- zur Herstellung eines Verbundwerkstoffs, der vorzugsweise bei der Herstellung von biologisch abbaubarem Einweggeschirr, Gläsern, Tabletts und Besteck verwendet wird;
- für eine Gewebeveredelung, vorzugsweise zur Imprägnierung eines Gewebes;
- für die Herstellung einer Feuchtigkeitsaufnahmevorrichtung.

8. Folie aus Polyalkylencarbonat nach einem der Ansprüche 1-5, wobei die Folie vorzugsweise eine transparente oder durchscheinende Folie ist und vorzugsweise eine Dicke zwischen 1 $\mu$m und 10 mm aufweist.

9. Verbundmaterial, umfassend das Polyalkylencarbonat nach einem der Ansprüche 1 bis 5 und mindestens ein weiteres Material, ausgewählt aus der Gruppe, bestehend aus: Naturfaser, Zellulose, Papier, Pappe, Gewebe, Vliesstoff und einer Kombination davon, wobei das Polyalkylencarbonat vorzugsweise eine Folie aus Polyalkylencarbonat ist, wobei die Folie vorzugsweise mit mindestens einer Schicht des mindestens einen weiteren Materials verbunden ist.

## Revendications

1. Carbonate de polyalkylène obtenu par une réaction de copolymérisation catalytique hétérogène à partir de $CO_2$ et d'un époxyde d'alkyle contenant au moins 3 atomes de carbone, dans lequel ledit carbonate de polyalkylène a un poids moléculaire moyen pondéré ($M_w$) compris entre 10 et 300 kg/mol, déterminé comme indiqué dans la spécification, et est **caractérisé par le fait qu'**il a :

i) un pourcentage de liaisons éther par rapport au total des liaisons carbonate et éther compris entre 0 et 30 %, déterminé comme indiqué dans la spécification ;
ii) des propriétés d'autocicatrisation dans un laps de temps compris entre 1 minute et 4 jours, les propriétés d'autocicatrisation étant définies et évaluées comme indiqué dans la spécification ;
iii) une récupération de la déformation comprise entre 70 et 100 % après un pourcentage d'allongement supérieur à 600 % déterminé comme indiqué dans la spécification,
iv) un pourcentage d'allongement à la rupture ($\varepsilon_b$ ) supérieur à 600 %, déterminé comme indiqué dans la

spécification ;
v) un module d'élasticité (E) compris entre 50 et 1000 MPa, déterminé comme indiqué dans le cahier des charges.

**2.** Le polycarbonate d'alkylène selon la revendication 1, **caractérisé par le fait qu'**il possède en outre au moins l'une des caractéristiques suivantes :

vi) une limite d'élasticité ($\delta y$) supérieure à 0,5 MPa, déterminée comme indiqué dans la spécification ; et/ou
vii) une résistance ultime à la traction ($\delta_b$ ) supérieure à 1 MPa, déterminée comme indiqué dans la spécification ; et/ou
viii) une température de transition vitreuse ($T_g$ ) comprise entre 0 et 35 °C, déterminée comme indiqué dans la spécification.

**3.** Le polycarbonate d'alkylène selon la revendication 1 ou 2, dans lequel ladite réaction de copolymérisation catalytique hétérogène comprend les étapes suivantes :

(a) réaction du dioxyde de carbone avec un époxyde d'alkyle contenant au moins 3 atomes de carbone, de préférence en l'absence de solvant organique, en présence d'un catalyseur à base de dicarboxylate de zinc ; ledit catalyseur à base de dicarboxylate de zinc est obtenu par réaction, avec un acide dicarboxylique aliphatique saturé, d'un composé à base de zinc comprenant un mélange de ZnO et d'un composé répondant à la formule générale (I) :

$$Zn_x(OH)_y(L)_z\text{-}nHO_2 \qquad \text{Formule (I)}$$

dans lequel L est choisi dans le groupe consistant en : NOs , $CH_3$ $CO_2$ , (SO )$_{40,5}$ , halogénure et acétylacétonate (AcAc),

$$2x = y + z ;$$

où
x est compris entre 1 et 5,
y est compris entre 1 et 8,
z est compris entre 1 et 2, et
n est compris entre 0 et 20.

**4.** Carbonate de polyalkylène selon la revendication 3, dans lequel le composé à base de zinc est obtenu par les étapes suivantes :

(b) fournir une solution d'un précurseur de zinc ayant la formule générale $Zn(L)_2$ -n$H_2$ O, dans laquelle n et L sont tels que définis à l'étape (a) ;
(c) ajouter une solution d'une base à ladite solution d'un précurseur de zinc, ce qui permet d'obtenir un précipité ;
(d) séparer le précipité de la solution surnageante et soumettre le solide ainsi obtenu à un traitement thermique :

- à une température (T) : 30 °C < T < 90 °C et pendant une durée (t) : 20 heures < t ≤ 60 heures ; ou
- à une température (T) : 90 °C ≤ T ≤ 150 °C et pendant une durée (t) : 20 minutes ≤ t ≤ 20 heures ; ou
- à une température (T) : 150 °C < T ≤ 400 °C et pendant une durée (t) : 20 minutes ≤ t < 20 heures.

**5.** Carbonate de polyalkylène selon l'une quelconque des revendications précédentes, dans lequel ledit carbonate de polyalkylène est le carbonate de polypropylène (PPC) répondant à la formule générale (II) :

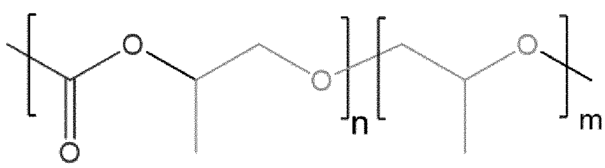

(II)

où m est compris entre 0 et 0,43n, de préférence entre 0,031n et 0,43n, de préférence entre 0,031n et 0,33n ; et dans lequel l'époxyde d'alkyle utilisé à l'étape (a) est l'oxyde de propylène.

**6.** Utilisation du carbonate de polyalkylène selon l'une quelconque des revendications précédentes pour préparer un produit choisi dans le groupe consistant en : un film, un matériau composite et des microsphères.

**7.** Utilisation du carbonate de polyalkylène selon l'une quelconque des revendications précédentes :

- dans le secteur cosmétique, de préférence pour la préparation de microsphères à utiliser dans et/ou comme formulation cosmétique ;
- dans le secteur biomédical en tant que matériau bioérodable et/ou biodégradable pour la libération contrôlée d'ingrédients actifs ;
- dans le secteur de l'emballage, de préférence pour l'emballage d'un produit, plus particulièrement pour l'emballage d'un produit alimentaire ;
- dans l'emballage industriel comme film rétractable pour emballer les pièces de machines ;
- dans l'agriculture pour la production de films de paillage ;
- comme revêtement ou protection de surface, de préférence pour recouvrir la surface d'un monument ;
- pour la production d'un matériau composite, utilisé de préférence dans la production de vaisselle, de verres, de plateaux et de couverts jetables et biodégradables ;
- pour l'ennoblissement d'un tissu, de préférence pour l'imperméabilisation d'un tissu ;
- pour la production d'un dispositif d'absorption de l'humidité.

**8.** Film de carbonate de polyalkylène selon l'une quelconque des revendications 1 à 5, ledit film étant de préférence un film transparent ou translucide et ayant de préférence une épaisseur comprise entre 1 μm et 10 mm.

**9.** Matériau composite comprenant le carbonate de polyalkylène selon l'une des revendications 1 à 5 et au moins un autre matériau choisi dans le groupe consistant en : fibres naturelles, cellulose, papier, carton, tissu, tissu non tissé, et une combinaison de ceux-ci, ledit carbonate de polyalkylène étant de préférence un film de carbonate de polyalkylène, ledit film étant de préférence lié à au moins une couche dudit au moins un autre matériau.

Fig.1

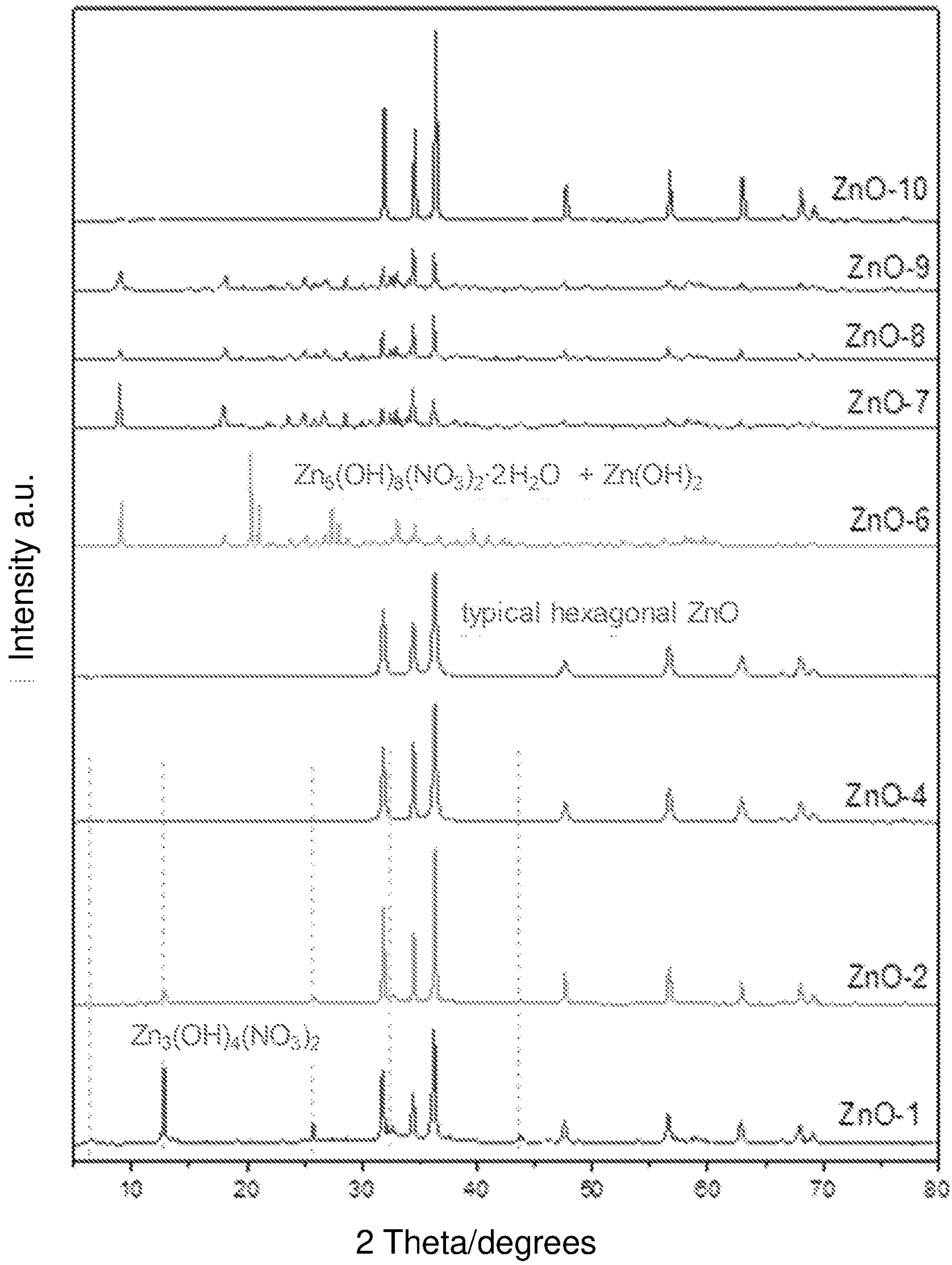
ZnO-10
ZnO-9
ZnO-8
ZnO-7
$Zn_5(OH)_8(NO_3)_2 \cdot 2H_2O$ + $Zn(OH)_2$
ZnO-6
typical hexagonal ZnO
ZnO-4
ZnO-2
$Zn_3(OH)_4(NO_3)_2$
ZnO-1
Intensity a.u.
10
20
30
40
50
60
70
80
2 Theta/degrees

Fig.2

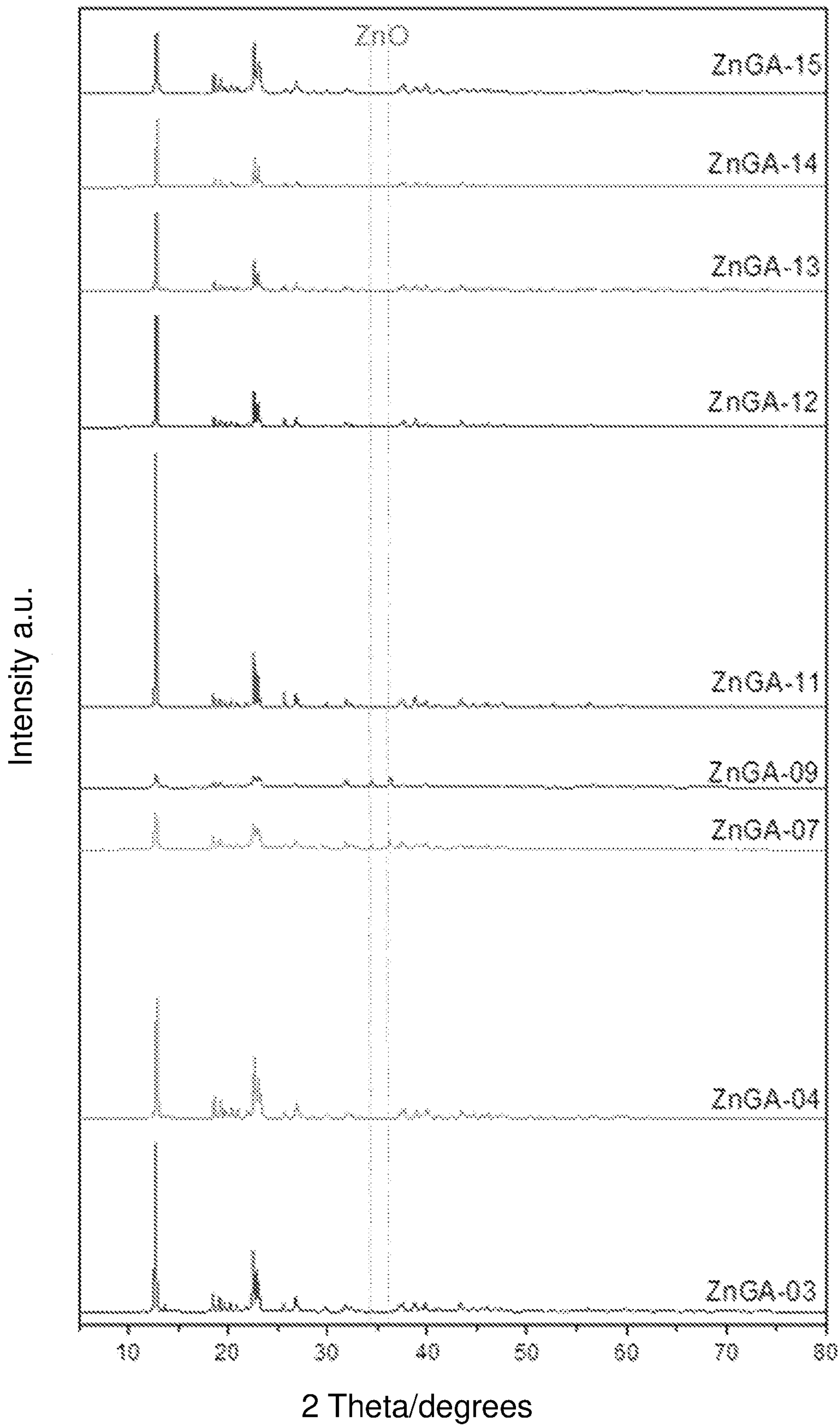
ZnO
ZnGA-15
ZnGA-14
ZnGA-13
ZnGA-12
ZnGA-11
ZnGA-09
ZnGA-07
ZnGA-04
ZnGA-03
Intensity a.u.
10
20
30
40
50
60
70
80
2 Theta/degrees

Fig.3

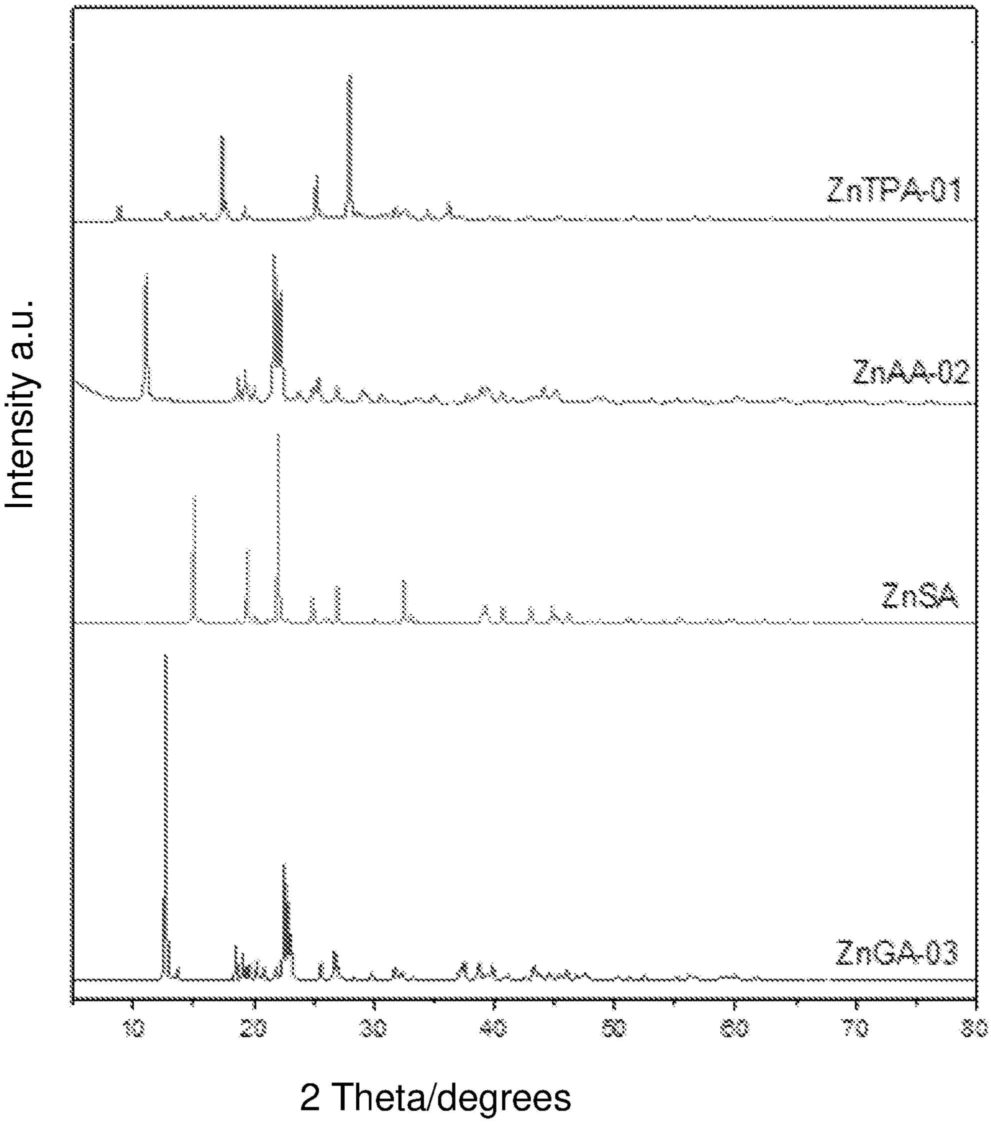
ZnTPA-01
ZnAA-02
ZnSA
ZnGA-03
Intensity a.u.
10
20
30
40
50
60
70
80
2 Theta/degrees

**Fig.4**

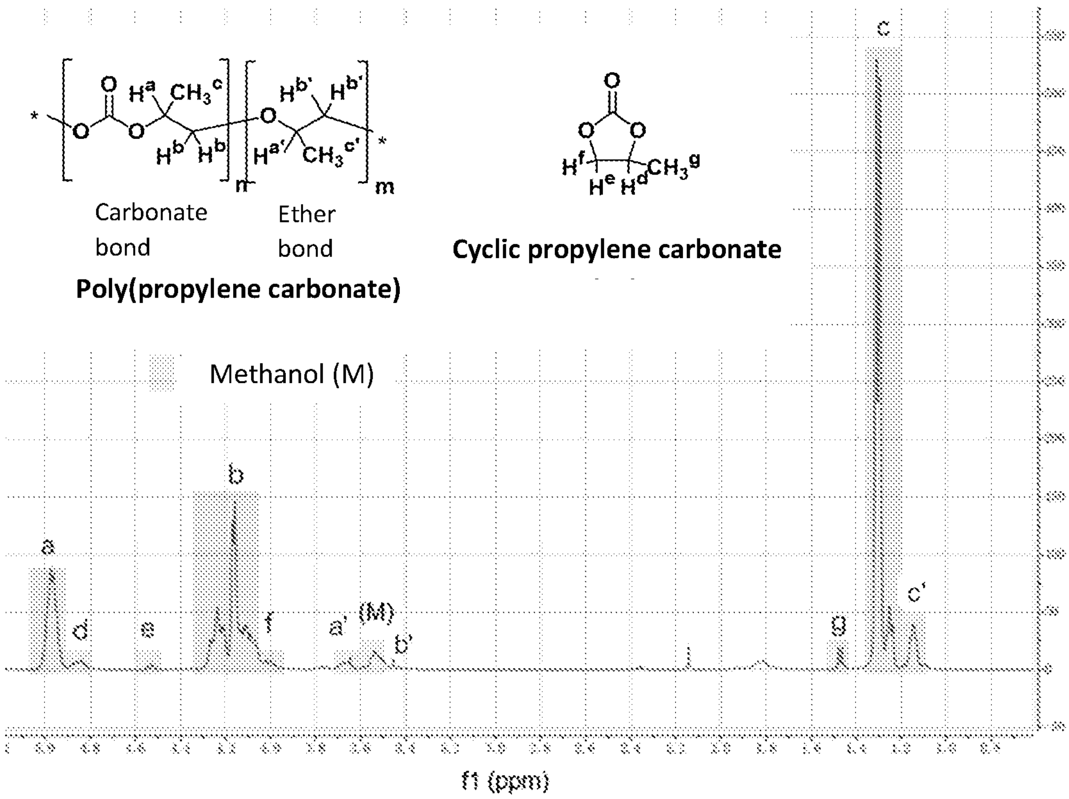
Carbonate bond
Ether bond
Poly(propylene carbonate)
Cyclic propylene carbonate
Methanol (M)
a
d
e
b
f
a'
(M)
b'
g
c
c'
f1 (ppm)

Fig.5

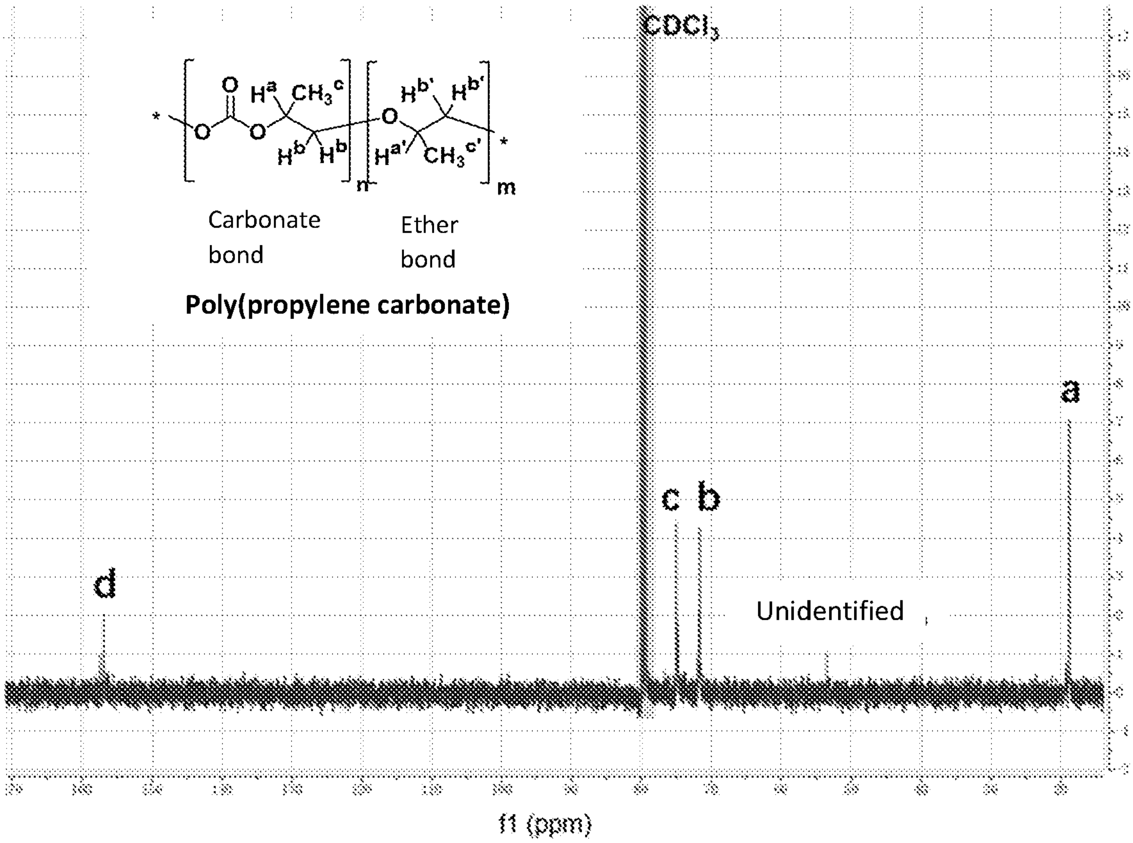
CDCl3
Carbonate bond
Ether bond
Poly(propylene carbonate)
a
c
b
d
Unidentified
f1 (ppm)

Fig.6

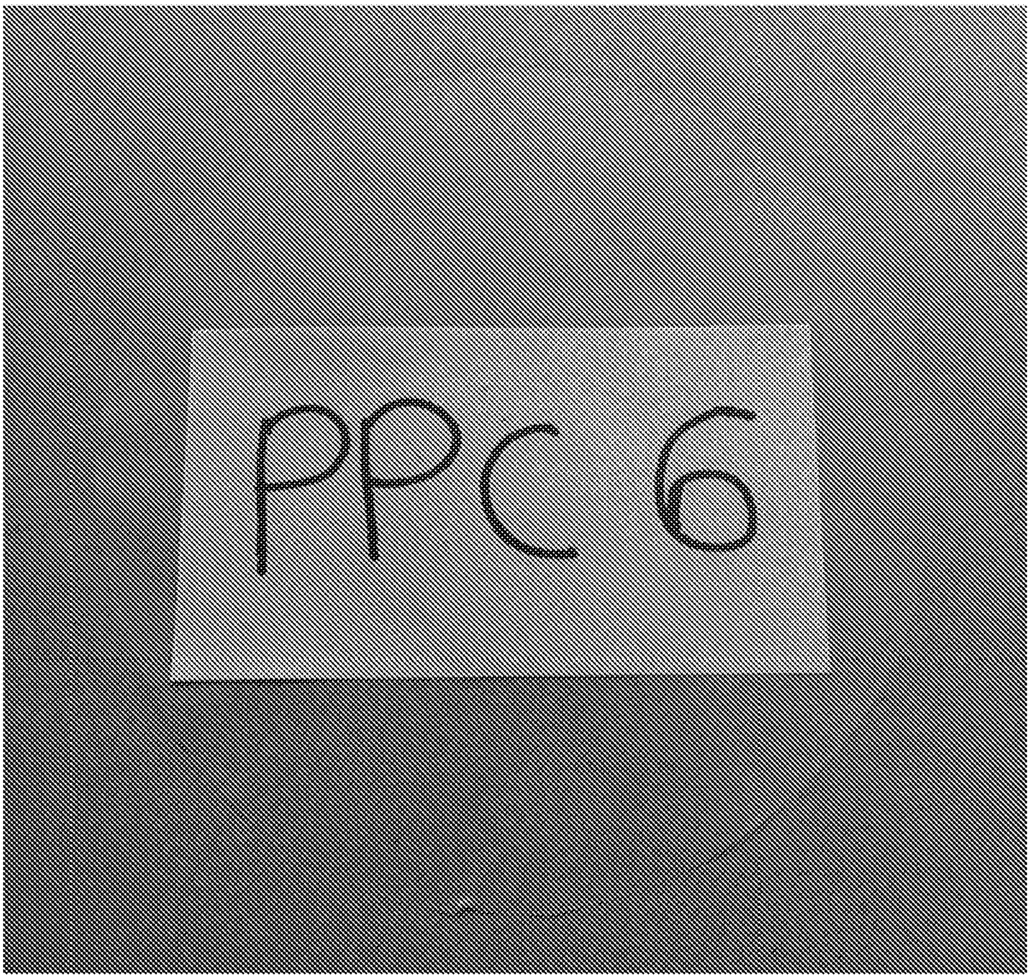

Fig.7

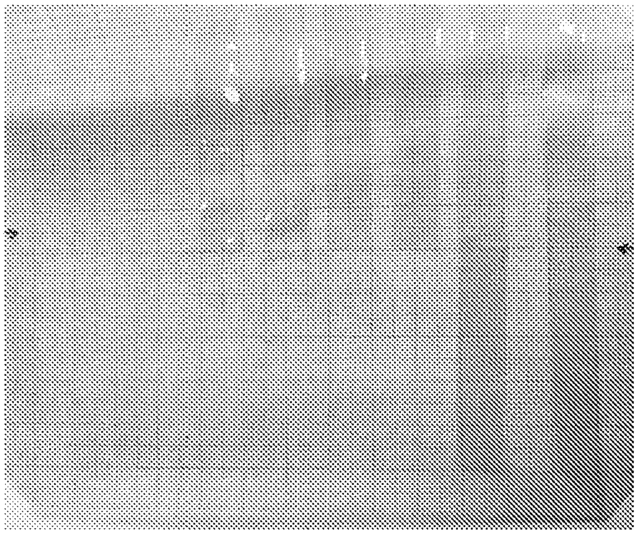

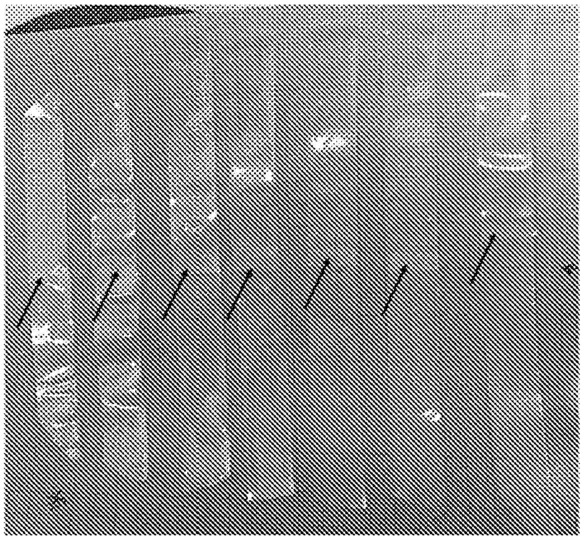

Fig. 8

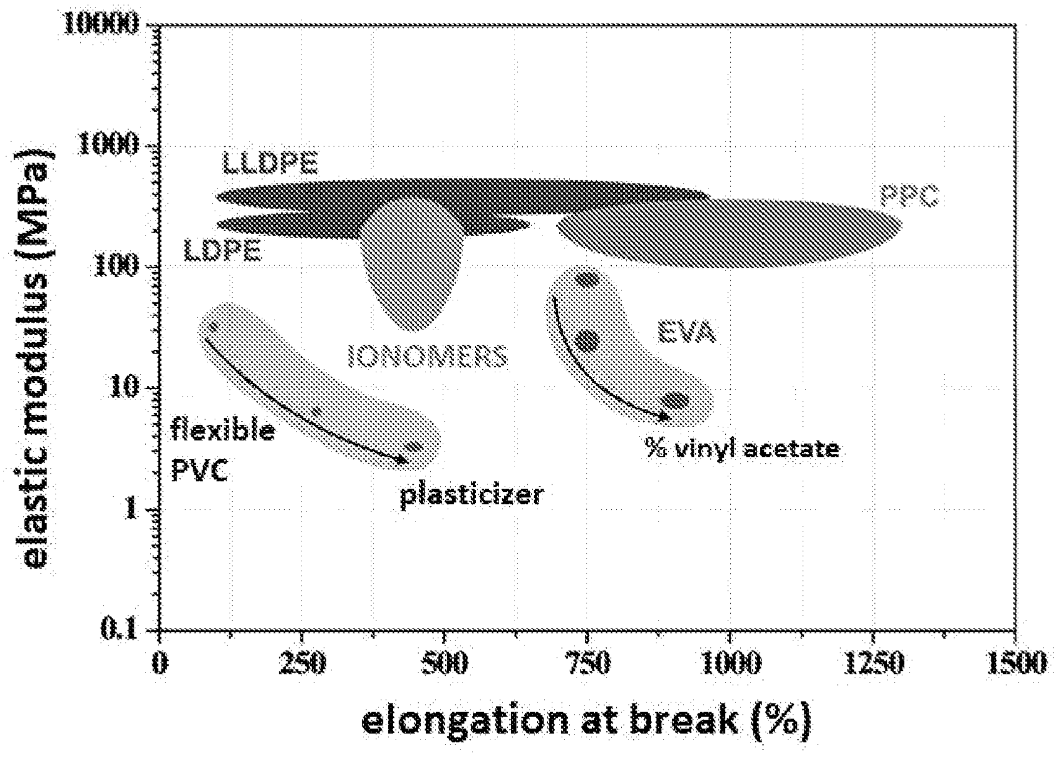
10000
1000
100
10
1
0.1
0
250
500
750
1000
1250
1500
elastic modulus (MPa)
elongation at break (%)
LLDPE
LDPE
PPC
IONOMERS
EVA
flexible
PVC
plasticizer
% vinyl acetate

Fig. 9

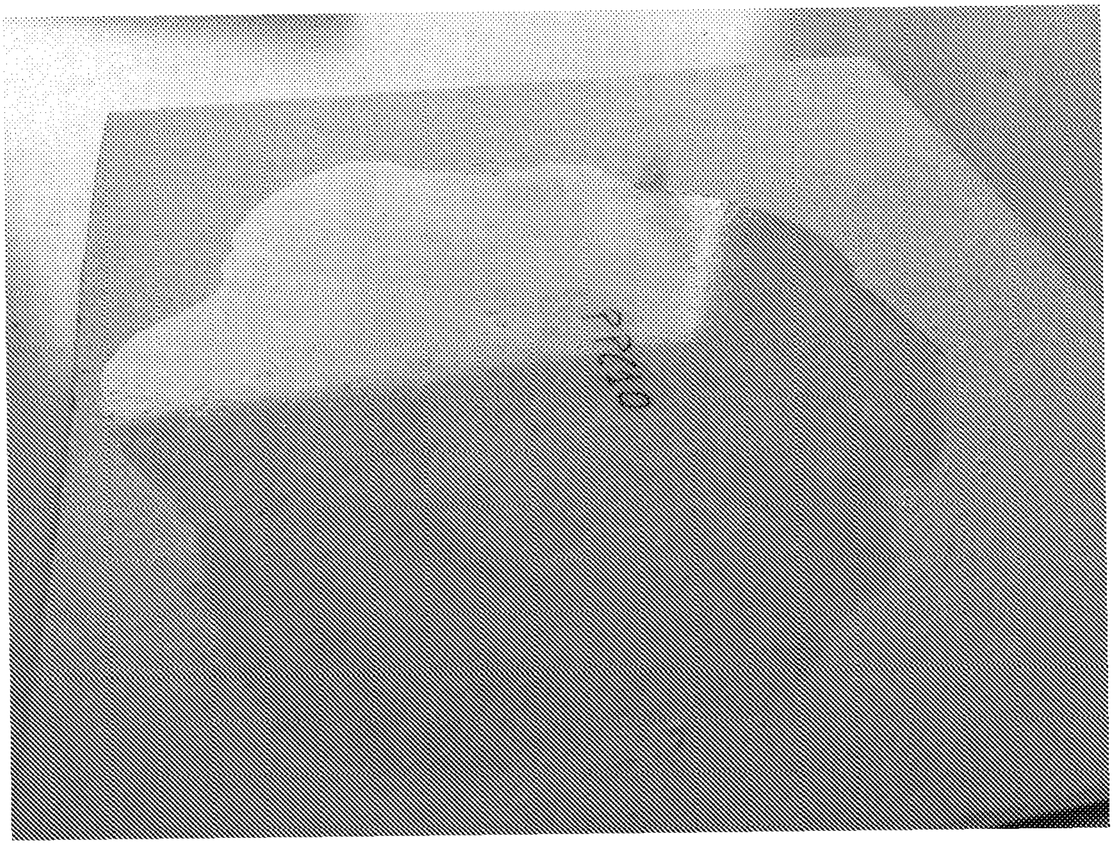

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 101468320 A **[0002]**
- KR 20180075312 A **[0002]**